(19) Europäisches Patentamt
European Patent Office
Office européen des brevets

(11) **EP 3 730 918 A1**

(12) **EUROPÄISCHE PATENTANMELDUNG**

(43) Veröffentlichungstag:
**28.10.2020 Patentblatt 2020/44**

(51) Int Cl.:
***G01M 11/02*** (2006.01)    *G02C 7/06* (2006.01)

(21) Anmeldenummer: **19170714.0**

(22) Anmeldetag: **23.04.2019**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Carl Zeiss Vision International GmbH
73430 Aalen (DE)**

(72) Erfinder: **GLASENAPP, Carsten
73447 Oberkochen (DE)**

(74) Vertreter: **Gauss, Nikolai et al
Pfiz/Gauss Patentanwälte PartmbB
Tübingerstraße 26
70178 Stuttgart (DE)**

(54) **VERFAHREN UND VORRICHTUNG ZUM VERMESSEN DER LOKALEN BRECHKRAFT UND/ODER DER BRECHKRAFTVERTEILUNG EINES BRILLENGLASES**

(57)    Die Erfindung betrifft ein Verfahren zum Vermessen der lokalen Brechkraft oder der Brechkraftverteilung eines linken und/oder eines rechten Brillenglases (18, 20), vorzugsweise in einer Brillenfassung (22), in Trageposition auf dem Kopf (24) eines Brillenträgers. Die Erfindung betrifft auch ein Computerprogrammprodukt mit einem Computerprogramm mit Programmcode sowie eine Vorrichtung zur Durchführung des Verfahrens.

Fig.1

EP 3 730 918 A1

**Beschreibung**

Die Erfindung betrifft ein Verfahren zum Vermessen der lokalen Brechkraft oder der Brechkraftverteilung eines linken und/oder eines rechten Brillenglases, vorzugsweise in einer Brillenfassung, in Trageposition auf dem Kopf eines Brillenträgers. Darüber hinaus betrifft die Erfindung ein Computerprogrammprodukt mit einem Computerprogramm mit Programmcode sowie eine Vorrichtung zur Durchführung des Verfahrens.

Um einem Brillenträger das scharfe Sehen zu ermöglichen, müssen die Brillengläser in der Brillenfassung zu den Augen des Brillenträgers korrekt positioniert und ausgerichtet werden. Das korrekte Ausrichten und Positionieren ist grundsätzlich bei allen Brillengläsern erforderlich. Besondere Bedeutung hat das korrekte Ausrichten und Positionieren der Brillengläser insbesondere bei individualisierten optischen Brillenglasdesigns, bei torischen Brillenglasdesigns, bei Brillengläsern mit hoher dioptrischer Wirkung und bei Gleitsicht-Brillengläsern. Gleitsicht-Brillengläser ermöglichen Brillenträgern das scharfe Sehen in unterschiedlichen Gebrauchssituationen, z. B. in unterschiedlichen Entfernungen, nur durch Verändern der Blickrichtung, ohne dass es dabei eines größeren Akkommodationserfolges der Augen bedarf. Gleitsicht-Brillengläser sind gemäß DIN EN ISO 13666:2013-10, Absatz 8.3.5 Brillengläser mit mindestens einer Gleitsichtfläche und einer zunehmenden (positiven) dioptrischen Wirkung, wenn der Brillenträger nach unten blickt. Individualisierte Brillengläser und/oder Gleitsicht-Brillengläser haben einen oder mehrere Bezugspunkte, z. B. einen Fern-Durchblickpunkt sowie einen Nah-Durchblickpunkt, deren Lage, je nach Gebrauchssituation an den Ort der Pupillen der Augen eines Brillenträgers angepasst werden muss. Der Fern-Durchblickpunkt ist gemäß DIN EN ISO 13666:2013-10, Absatz 5.16, die angenommene Lage des Durchblickpunkts auf einem Brillenglas für das Sehen in die Ferne unter bestimmten Bedingungen. Der Nah-Durchblickpunkt ist gemäß DIN EN ISO 13666:2013-10, Absatz 5.17, die angenommene Lage des Durchblickpunkts auf einem Brillenglas für das Sehen in die Nähe unter bestimmten Bedingungen. Bei torischen Brillenglasdesigns besteht außerdem die Notwendigkeit der für einen Brillenträger richtigen Orientierung ihrer zylindrischen Wirkung.

Aus der WO 2016/207412 A1 sind eine Vorrichtung und ein Verfahren der eingangs genannten Art bekannt. Dort ist das Vermessen der lokalen Brechkraft eines linken und/oder rechten Brillenglases in einer Brillenfassung mit einer Messvorrichtung beschrieben, in der die Brillenfassung angeordnet wird. Diese Messvorrichtung enthält eine Bilderfassungseinrichtung und ein Display für das Anzeigen einer Teststruktur, dessen Lage relativ zu der Bilderfassungseinrichtung bekannt ist. Mittels der Bilderfassungseinrichtung wird die an dem Display zur Anzeige gebrachte Teststruktur mit einem Abbildungsstrahlengang erfasst, der das linke und/oder das rechte Brillenglas in der Brillenfassung durchsetzt. Zusätzlich wird mittels des Displays ein Abschnitt der Brillenfassung erfasst, der ein Koordinatensystem der Brillenfassung definiert. In einer Rechnereinheit wird dann mittels Bildverarbeitung aus dem erfassten Abschnitt der Brillenfassung und der erfassten Abbildung der Teststruktur sowie aus den Koordinaten der Teststruktur und der erfassten Abbildung der Teststruktur in einem zu dem Koordinatensystem der Brillenfassung referenzierten Koordinatensystem die lokale Brechkraft eines linken und/oder rechten Brillenglases bestimmt.

Insbesondere bei Brillen mit Gleitsichtgläsern ist es von Interesse, deren von der genauen Lage des linken bzw. rechten Brillenglases am Kopf des Brillenträgers abhängige Wirkung genau zu kennen, Mittels Messvorrichtungen, die für das Vermessen von in einer Haltevorrichtung aufgenommenen Brillen mit Brillengläsern dienen, lässt sich diese Wirkung lediglich abschätzen, nicht aber bestimmen, da hier die genaue Lage des linken bzw. rechten Brillenglases am Kopf des Brillenträgers angenommen werden muss.

Aufgabe der Erfindung ist es, auf einfache Weise und ohne großen apparativen Aufwand die dioptrische Wirkung eines linken und/oder eines rechten Brillenglases in einer Brillenfassung in Trageposition auf dem Kopf des Brillenträgers zu vermessen, z. B. für die Ferne und/oder für die Nähe.

Diese Aufgabe wird durch das in Anspruch 1 angegebene Verfahren gelöst. Vorteilhafte Weiterbildungen der Erfindung sind in den abhängigen Ansprüchen angegeben.

Die Erfindung beruht auf dem Gedanken, dass insbesondere mit einem eine Bilderfassungseinrichtung aufweisenden mobilen Endgerät wie z. B. einem Smartphone oder einer Kamera, das ein Brillenträger in seiner Hand hält, Abbildungen des Kopfs des Brillenträgers erfasst werden können, die für unterschiedliche Blickrichtungen durch ein linkes bzw. rechtes Brillenglas hindurch aufgenommene Bilder von dessen Augen zeigen, die dazu herangezogen werden können, die dioptrische Wirkung des linken bzw. rechten Brillenglases zu vermessen und für das linke und/oder rechte Brillenglas eine Brechkraftverteilung anzugeben, wenn die Form bzw. Größe eines vorderen Augenabschnittes des linken und/oder rechten Auges des Brillenträgers sowie die Lage der von dem Brillenträger getragenen Brille an dessen Kopf bekannt ist, diese bei dem Erfassen der unterschiedlichen Abbildungen nicht verrutscht, und die erfassten ersten Abbildungen das linke und/oder rechte Brillenglas mit einer zu einer jeweiligen Aufnahmeposition weisenden Blickrichtung zeigen.

Bei dem in Anspruch 1 angegebenen Verfahren zum Vermessen der lokalen Brechkraft oder der Brechkraftverteilung eines linken und/oder eines rechten Brillenglases in einer Brillenfassung in Trageposition auf dem Kopf eines Brillenträgers werden in einem ersten Schritt wenigstens zwei erste Abbildungen aus relativ zu dem Kopf unterschiedlichen Aufnahmepositionen heraus erfasst. Zur Bestimmung der lokalen Brechkraft am linken Brillenglas enthalten diese Abbildungen dabei jeweils ein Bild eines vorderen Augenabschnitts eines linken Auges mit wenigstens zwei voneinander beabstandeten Strukturpunkten darin, wobei das linke Auge jeweils eine zu der Aufnahmeposition weisende Blickrichtung hat und wobei ein die wenigstens zwei Strukturpunkte abbildender Abbildungsstrahlengang das linke Brillenglas durchsetzt, und/oder ein Bild eines vorderen Augenabschnitts eines rechten Auges mit wenigstens zwei voneinander beabstandeten Strukturpunkten darin, wobei das rechte Auge jeweils eine zu der Aufnahmeposition weisende Blickrichtung hat und wobei ein den wenigstens einen Strukturpunkt abbildender Abbildungsstrahlengang das rechte Brillenglas durchsetzt.

Zu bemerken ist, dass der vordere Augenabschnitt eines Auges insbesondere die Bindehaut, die Hornhaut, die Lederhaut, die Iris, den Ziliarkörper, das Epithel der Iris und des Ziliarkörpers, die vordere und hintere Augenkammer, die Linse und die Pupille enthält.

Unter einem Strukturpunkt eines vorderen Augenabschnitt wird vorliegend ein geometrischer Punkt einer Struktur verstanden, deren Bild in wenigstens einer Abbildung oder Aufnahme des Objekts durch Erfassen der Szene mit wenigstens einer Bilderfassungseinrichtung insbesondere aufgrund einer von der Strukturumgebung unterschiedlichen Helligkeit und/oder Farbe eindeutig zu erkennen ist.

Ein Strukturpunkt eines vorderen Augenabschnitts kann vorliegend z. B. ein Punkt auf einer Ecke oder Kante oder auf dem Rand einer Struktur oder innerhalb der Struktur selbst in Form einer Feinstruktur der Iris, der Sklera oder der Linse sein.

Unter wenigstens zwei zueinander beabstandeten Strukturpunkten versteht die Erfindung mehrere Strukturpunkte, von denen je zwei einen räumlichen Abstand zueinander aufweisen.

Unter einem Abbildungsstrahlengang für einen Strukturpunkt wird vorliegend der Verlauf der Lichtstrahlen verstanden, die eine optische Abbildung des Strukturpunkts aus der Szene als ein Strukturpunktbild in die Abbildung der Szene in einer Bilderfassungseinrichtung bewirken. Als der Hauptstrahl des Abbildungsstrahlengangs für einen Strukturpunkt wird im Folgenden dessen eine Symmetrieachse bildende optische Achse bezeichnet.

Unter der Blickrichtung eines Auges versteht die Erfindung die Richtung eines das Zentrum der Pupille durchsetzenden Vektors, der an dem das Zentrum des Augapfels bildenden Augenrotationspunkt beginnt, um den das Auge für das Betrachten von Objekten, die in unterschiedlichen Richtungen angeordnet sind, rotieren kann, ohne dass hierfür die Haltung des Kopfes verändert werden muss.

In einem weiteren Schritt, der insbesondere zeitlich vor oder nach dem ersten Schritt liegen kann, der aber u.U. auch gleichzeitig erfolgen kann, werden wenigstens zwei zweite Abbildungen aus relativ zu dem Kopf unterschiedlichen Aufnahmepositionen heraus erfasst. Zur Bestimmung der Brechkraft am linken Brillenglas enthalten diese zweiten Abbildungen jeweils ein Bild der wenigstens zwei voneinander beabstandeten Strukturpunkte des vorderen Augenabschnitts des linken Auges, wobei der dem Bild dieser wenigstens zwei Strukturpunkte zugrundeliegende Abbildungsstrahlengang beim Erfassen weder das linke noch das rechte Brillenglas in der Brillenfassung durchsetzt. Zur Bestimmung der Brechkraft am rechten Brillenglas enthalten diese zweiten Abbildungen jeweils ein Bild der wenigstens zwei Strukturpunkte des vorderen Augenabschnitts des rechten Auges, wobei der dem Bild dieser wenigstens zwei Strukturpunkte zugrundeliegende Abbildungsstrahlengang beim Erfassen weder das linke noch das rechte Brillenglas in der Brillenfassung durchsetzt. Um dies zu erreichen, können die zweiten Abbildungen ohne das linke und/oder das rechte Brillenglas in der Brillenfassung oder ohne die Brillenfassung, enthaltend das linke und/oder das rechte Brillenglas aufgenommen werden. Alternativ können die Aufnahmen auch mit einem linken und/oder rechten Brillenglas in der Brillenfassung aus verschiedenen Aufnahmepositionen heraus aufgenommen werden, sodass die Abbildungsstrahlengänge zu den Strukturpunkten an den Brillengläsern vorbei verlaufen.

Des Weiteren werden in einem Schritt Brillenfassungsinformationsdaten aus wenigstens zwei einen identischen Abschnitt der Brillenfassung enthaltenden Abbildungen aus der Gruppe der wenigstens zwei ersten Abbildungen und der wenigstens zwei zweiten Abbildungen in einem Koordinatensystem, das zu einem zu dem Kopf des Brillenträgers ortsfesten Koordinatensystem referenziert ist, mittels Bildauswertung berechnet. Diese Brillenfassungsinformationsdaten umfassen Informationen aus der Gruppe enthaltend die Form der Brillenfassung, die Koordinaten der Punkte der Brillenfassung im Raum relativ zu einem Koordinatensystem sowie die Position und Lage eines repräsentativen Punktes der Brillenfassung, z. B. des Schwerpunkts oder der Brückenmitte, relativ zu einer Bilderfassungseinrichtung oder zum Kopf.

In einem weiteren Schritt werden dann Koordinaten der wenigstens zwei Strukturpunkte des vorderen Augenabschnitts des linken Auges und/oder wenigstens zwei Strukturpunkte des vorderen Augenabschnitts des rechten Auges aus den wenigstens zwei zweiten Abbildungen in einem Koordinatensystem, das zu einem zu dem Kopf des Brillenträgers ortsfesten Koordinatensystem referenziert ist, mittels Bildauswertung bestimmt.

Unter den Koordinaten eines Punktes versteht die Erfindung einen dreidimensionalen Vektor, der die Lage des Punktes im Raum in Bezug auf den Ursprung eines Koordinatensystems mit drei Raumachsen angibt.

Das zu der Brillenfassung ortsfeste Koordinatensystem bezeichnet dabei ein Koordinatensystem, das sich relativ zu der Brillenfassung immer am gleichen Ort befindet. Das Koordinatensystem kann z. B. anhand eines Abschnitts der Brillenfassung definiert sein, anhand eines Punkts und/oder einer Achse des Kopfes, anhand extrinsischer Parameter einer Bilderfassungseinrichtung im Raum oder anhand eines auf sonstige Weise beliebig gewählten Koordinatensystems im Raum.

Unter zwei zueinander referenzierten Koordinatensystemen werden dabei Koordinatensysteme verstanden, zu denen bekannt ist, wie die Koordinaten eines Punktes oder Vektors aus einem Koordinatensystem in dem anderen Koordinatensystem lauten.

Zu bemerken ist, dass diese Bildauswertung insbesondere in einer Rechnereinheit erfolgen kann, dass es jedoch grundsätzlich möglich ist, dass diese Bildauswertung durch eine Person erfolgt, die das Verfahren zum Vermessen der lokalen Brechkraft oder der Brechkraftverteilung eines linken und/oder eines rechten Brillenglases anwendet.

Zu bemerken ist auch, dass für die Bestimmung von Koordinaten zu einem Strukturpunkt in einem Koordinatensystem, das zu einem zu dem Kopf des Brillenträgers ortsfesten Koordinatensystem referenziert ist, das Erfassen von wenigstens zwei Abbildungen des Strukturpunkts aus unterschiedlichen Aufnahmepositionen erforderlich ist, wobei die Abbildungsstrahlengänge für den Strukturpunkt weder das rechte noch das linke Brillenglas durchsetzen dürfen.

In dem in Anspruch 1 angegebenen Verfahren wird die lokale dioptrische Wirkung des linken und/oder rechten Brillenglases jeweils an einem Durchblickunkt des linken und/oder rechten Brillenglases bestimmt, durch den das linke Auge bzw. das rechte Auge des Brillenträgers mit einer zu der jeweiligen Aufnahmeposition weisenden Blickrichtung beim Erfassen einer ersten Abbildung blickt.

Der Durchblickpunkt durch das linke Brillenglas zu wenigstens einer ersten Abbildung wird jeweils aus einem aus dem Bild eines vorderen Augenabschnitts des linken Auges mittels Bildauswertung ermittelten Zentrum einer Bildstruktur aus der Gruppe Pupillenbild, Irisbild und den Brillenfassungsinformationsdaten bestimmt. Der Durchblickpunkt durch das rechte Brillenglas wird entsprechend aus wenigstens einer ersten Abbildung jeweils aus einem aus dem Bild eines vorderen Augenabschnitts des rechten Auges mittels Bildauswertung ermittelten Zentrum einer Bildstruktur aus der Gruppe Pupillenbild, Irisbild und den Brillenfassungsinformationsdaten bestimmt.

Die Bildstruktur kann dabei z. B. ein Pupillenbild sein, das ein Abbild der Pupille des linken bzw. rechten Auges ist. Die Bildstruktur kann aber auch ein Irisbild, d. h. ein Abbild der Iris des linken bzw. rechten Auges sein. Das Zentrum dieser Bildstruktur wird dann aus dem entsprechenden Bild eines vorderen Augenabschnitts des linken bzw. rechten Auges mittels Bildauswertung bestimmt.

Der Durchblickpunkt eines linken bzw. rechten Brillenglases kann dann insbesondere wie folgt berechnet werden: Zuerst wird das Zentrum der Bildstruktur, z. B. das Pupillenzentrum, in der wenigstens einen Abbildung, anhand eines Algorithmus oder auch durch Annotation von Hand in der Aufnahme durch einen Nutzer bestimmt. Zu dem Pupillenzentrum auf der Bildebene wird darauf anhand intrinsischer und extrinsischer Parameter der Bilderfassungseinrichtung der zu diesem Punkt gehörende Hauptstrahl des Abbildungsstrahls berechnet. Mittels der Brillenfassungsinformationsdaten kann dann der Ort, an dem der Hauptstrahl am linken bzw. rechten Brillenglas gebrochen wird, als Schnittpunkt des Hauptstrahls mit dem linken bzw. rechten Brillenglas berechnet werden. Dieser Schnittpunkt entspricht dann dem Durchblickpunkt am linken bzw. rechten Brillenglas.

Schließlich wird zur Bestimmung einer lokalen dioptrischen Wirkung des linken bzw. rechten Brillengases an dem Durchblickpunkt die lokale Brechkraft an diesem Punkt berechnet. Dafür werden die aus den wenigstens zwei zweiten Abbildungen berechneten Koordinaten der wenigstens zwei Strukturpunkte des vorderen Augenabschnitts des linken bzw. rechten Auges und das Bild dieser wenigstens zwei Strukturpunkte in einer Abbildung aus der Gruppe der wenigstens zwei ersten Abbildungen herangezogen.

Eine Idee der Erfindung ist es, die lokale dioptrische Wirkung des linken und/oder rechten Brillenglases aus einem Vergleich der Größen von Strukturen, z. B. der Iris, im vorderen Augenabschnitt des linken bzw. rechten Auges zu ermitteln. Die Erfindung nutzt dabei aus, dass die realen Größen entsprechender Strukturen durch die Abstände der aus den zweiten Abbildungen berechneten Strukturpunkten festgelegt sind.

Eine Idee der Erfindung ist insbesondere, dass die scheinbaren Größen der Strukturen bei der Beobachtung durch das linke bzw. rechte Brillenglas wie folgt bestimmt werden können: zuerst werden zu den wenigstens zwei Strukturpunkten des vorderen Augenabschnitts des linken bzw. rechten Brillenglases die zugehörigen Bilder der Strukturpunkte in den ersten Abbildungen detektiert. Zu diesen Bildern werden aus den intrinsischen und extrinsischen Parametern der Bilderfassungseinrichtung die Hauptstrahlen berechnet. Anschließend werden die Schnittpunkte der Hauptstrahlen mit dem linken bzw. rechten Brillenglas anhand der Brillenfassungsinformationsdaten bestimmt. Die Abstände dieser Schnittpunkte ergeben dann die scheinbaren Größen der Strukturen bei der Beobachtung durch das linke bzw. rechte Brillenglas. Aus dem Verhältnis der realen und scheinbaren Größen der Strukturen des vorderen linken bzw. rechten Augenabschnitts zueinander kann dann auf die lokale Brechkraft des linken bzw. rechten Brillenglases geschlossen werden.

In dem in Anspruch 1 angegebenen Verfahren wird dann eine lokale dioptrische Wirkung des linken Brillengases an dem Durchblickpunkt (x,y) aus den aus den wenigstens zwei zweiten Abbildungen berechneten Koordinaten der wenigstens zwei Strukturpunkte des vorderen Augenabschnitts des linken Auges und aus einem Bild dieser wenigstens zwei Strukturpunkte in einer Abbildung aus der Gruppe der wenigstens zwei ersten Abbildungen die lokale Brechkraft k(x,y) des linken Brillenglases an dem Durchblickpunkt (x,y9 bestimmt und/oder es wird eine lokale dioptrische Wirkung des rechten Brillengases an dem Durchblickpunkt (x,y) aus den aus den wenigstens zwei zweiten Abbildungen berechneten Koordinaten der wenigstens zwei Strukturpunkte des vorderen Augenabschnitts des rechten Auges und aus einem Bild dieser wenigstens zwei Strukturpunkte in einer Abbildung aus der Gruppe der wenigstens zwei ersten Abbildungen die lokale Brechkraft k(x,y) des rechten Brillenglases an dem Durchblickpunkt bestimmt.

Unter der dioptrischen Wirkung eines Brillenglases versteht diese Erfindung entsprechend der in DIN EN ISO 13666:2013-10, Absatz 9.3, angegebenen Definition den Sammelbegriff für die fokussierende und die prismatische Wirkung des Brillenglases.

In einer vorteilhaften Weiterbildung der Erfindung wird zusätzlich zur Bestimmung einer lokalen dioptrischen Wirkung in Form der Brechkraft des linken Brillengases bzw. rechten Brillenglases an dem Durchblickpunkt die lokale prismatische Wirkung bestimmt. Diese wird anhand der Koordinaten eines Augenrotationspunkts des linken und/oder rechten Auges in einem Koordinatensystem, das zu einem zu dem Kopf des Brillenträgers ortsfesten Koordinatensystem referenziert ist, ermittelt.

Dabei wird ausgenutzt, dass die prismatische Wirkung des linken bzw. rechten Brillenglases aus der Ablenkung des Hauptstrahls zur Pupille des linken bzw. rechten Auges in einer ersten Abbildung am linken bzw. rechten Brillenglas bestimmt werden kann. Dieser Hauptstrahl verläuft nämlich entlang einer angenommenen Blickrichtung von dem Augenrotationspunkt des linken bzw. rechten Auges durch das Zentrum der Pupille des linken bzw. rechten Auges zum Durchblickpunkt des linken bzw. rechten Brillenglases und von dort zu der Bildebene der Bilderfassungseinrichtung. Dieser Hauptstrahl wird dann aus den Koordinaten des Augenrotationspunkts des linken bzw. rechten Auges und dem Durchblickpunkt am linken bzw. rechten Brillenglas sowie den intrinsischen und extrinsischen Parametern der Bilderfassungseinrichtung berechnet.

Die Koordinaten des Augenrotationspunkts des linken Auges und/oder des Augenrotationspunkts des rechten Auges werden dabei aus einem für das linke Auge angenommenen Augendurchmesser $D_L$ und/oder aus einem für das rechte Auge angenommenen Augendurchmesser $D_R$ sowie aus Koordinaten wenigstens eines Strukturpunkt des Kopfes berechnet. Die Koordinaten des wenigstens einen Strukturpunkts des Kopfes, z. B. der Nasenspitze, werden dazu aus wenigstens zwei Abbildungen aus der Gruppe der wenigstens zwei ersten Abbildungen und der wenigstens zwei zweiten Abbildungen bestimmt.

Vorteilhaft ist das Inbetrachtziehen anatomischen Wissens über die Lage des linken und/oder rechten Auges im Kopf, z. B. relativ zu den berechneten Strukturpunkten des Kopfes. Der Augendurchmesser $D_L$ bzw. $D_R$ ist abhängig vom Geschlecht und dem Alter des Probanden und wird vorzugsweise als ein Wert im Bereich von 22 mm - 23 mm angenommen.

Von Vorteil ist es auch, die 3D-Geometrie des gesamten Kopfes aus den zweiten Abbildungen und den intrinsischen und extrinsischen Parametern der wenigstens einen Bilderfassungseinrichtung zu berechnen, da so sowohl die Lage der Brillenfassung relativ zum Kopf als auch die Position des Augenrotationspunkts des linken und/oder rechten Auges möglichst genau bestimmt werden können.

Zu bemerken ist, dass in dem Schritt des Bestimmens einer lokalen dioptrischen Wirkung des linken Brillenglases an dem Durchblickpunkt (x,y) die lokale prismatische Wirkung grundsätzlich auch anhand eines Versatzes des vorderen Augenabschnittes in dem Bild des linken Auges ermittelt werden kann.

Ein Vorteil dieses Verfahrens ist, dass der Brillenträger in die Lage versetzt wird, selbst seine Gleitsichtbrille zu vermessen. Somit ist es z. B. möglich, dass er online eine Bestellung für eine Zweitbrille aufgibt.

Bei Erfassen der zweiten Abbildungen aus relativ zu dem Kopf des Brillenträgers unterschiedlichen Aufnahmepositionen heraus ist es von Vorteil, wenn der Brillenträger die Blickrichtung nicht verändert, damit die Koordinaten der Strukturpunkte des linken und/oder rechten vorderen Augenabschnitts zuverlässig bestimmt werden können. Außerdem ist auf diese Weise die Blickrichtung des Brillenträgers dann für alle zweiten Aufnahmen identisch, was das Verfahren vereinfacht.

Zu bemerken ist allerdings, dass bei Erfassen der zweiten Abbildungen eines vorderen Augenabschnitts des linken oder rechten Auges dessen Blickrichtung auch zu der jeweiligen Aufnahmeposition weisen kann. Die Blickrichtung des linken bzw. rechten Auges zu einer jeden zweiten Abbildung kann nämlich aus dem Augenrotationspunkt des linken bzw. rechten Auges, dem Pupillenzentrum in der Abbildung und den intrinsischen und extrinsischen Parametern der Bilderfassungseinrichtung bestimmt werden und es kann anhand dieser Information die Bewegung der Strukturpunkte des vorderen Augenabschnitts des linken bzw. rechten Auges korrigiert werden.

Um eine hohe Genauigkeit der Berechnungen zu ermöglichen, ist es ebenfalls von Vorteil, wenn die Brillenfassung auf dem Kopf des Brillenträgers ihre Position und Lage nicht verändert, dass sie also während der Aufnahmen nicht verrutscht.

Um Brillenfassungsinformationsdaten zu berechnen, können aus den Aufnahmen mit Brillenfassung anhand eines 3D-Rekonstruktionsverfahrens oder eines Tiefenschätzungsverfahrens Koordinaten der Brillenfassung ermittelt werden. Dabei kann die Brillenfassung Gläser enthalten oder ohne Gläser vorliegen. Sind keine Gläser in der Brillenfassung enthalten, können die Gläser innerhalb der Brillenfassung anhand vereinfachter Annahmen angenähert werden, z. B. als Ebenen oder Flächen höherer Ordnung. Es kann auch ein Modell der Brillenfassung, z. B. ein CAD-Modell, vorliegen. Dieses Modell kann an die zuvor z. B. mittels eines 3D-Rekonstruktions- oder Tiefenschätzungsverfahren bestimmten Koordinaten der Brillenfassung angepasst werden, um die Form, Position und Lage der Brillenfassung mit höherer Genauigkeit bestimmen zu können.

3D-Rekonstruktions-Verfahren und Tiefenschätzungsverfahren sind z. B. im Buch "Multiple View Geometry" von R. Hartley und A. Zisserman, Cambridge University Press 2004 dargestellt, auf das hiermit vollumfänglich Bezug genommen und deren Offenbarungsgehalt in die Beschreibung dieser Erfindung mit einbezogen wird.

Für die Erzeugung der Brillenfassungsinformationsdaten ist es von Vorteil, wenn die Brillenfassung zuvor in den ersten und zweiten Abbildungen, die eine Brillenfassung enthalten, segmentiert wird. Dies ermöglicht eine genauere Berechnung der Koordinaten der Brillenfassung sowie deren Position und Lage im Raum und spart zusätzlich Rechenzeit. Als Segmentierung bezeichnet die Erfindung die Erzeugung von einer oder mehreren inhaltlich zusammenhängenden Regionen durch Zusammenfassung benachbarter Pixel entsprechend einem bestimmten Homogenitätskriterium, z. B. nach semantischen Kriterien. In diesem Fall werden alle Pixel der jeweiligen Abbildung bestimmt, die zu einem Bild der Brillenfassung gehören.

In dem vorstehend angegebenen Verfahren zum Vermessen der lokalen Brechkraft eines linken und/oder eines rechten Brillenglases wird bevorzugt eine Vielzahl von Strukturpunkten des vorderen Augenabschnitts des linken und/oder rechten Auges in den ersten und in den zweiten Abbildungen des Kopfes des Brillenträgers aus jeweils wenigstens einer Aufnahmeposition erfasst und es werden die vorstehend beschriebenen Verfahrensschritte für diese Vielzahl von Strukturpunkten durchgeführt. Unter einer Vielzahl von Strukturpunkten werden dabei vorliegend mindestens drei, bevorzugt wenigstens 10, weiter bevorzugt wenigstens 100, besonders bevorzugt wenigstens 1000 und ganz besonders bevorzugt wenigstens 10000 Strukturpunkte verstanden. Insbesondere ist eine Vielzahl von Strukturpunkten ≥ 100 Strukturpunkte und ≤ 1000 Strukturpunkte günstig, weil damit ein guter Kompromiss zwischen einer Genauigkeit von gemessenen Brechkräften und einem erforderlichen Berechnungsaufwand gebildet wird.

Indem die Brechkraft an einer Vielzahl von unterschiedlichen Stellen des linken und/oder rechten Brillenglases vermessen wird, kann nicht nur eine lokale Brechkraft sondern eine Brechkraftverteilung eines linken und/oder eines rechten Brillenglases vermessen werden.

Eine vorteilhafte Ausführungsform der Erfindung sieht vor, dass für das Berechnen der Koordinaten des wenigstens einen Strukturpunkts des vorderen Augenabschnitt des linken Auges und/oder für das Berechnen der Koordinaten des wenigstens einen Strukturpunkts des vorderen Augenabschnitts des rechten Auges und/oder für das Berechnen der Brechkraft aus den Strukturpunkten der ersten Abbildungen Feature-Detektions-Verfahren zur Detektion der Bilder geeigneter Strukturpunkte und Feature-Matching-Verfahren zur Detektion des Bilds korrespondierender Strukturpunkte in den ersten und den zweiten Abbildungen verwendet werden.

Zur Detektion der Bilder geeigneter Strukturpunkte können Feature-Detektions-Verfahren zur Anwendung kommen. Diese detektieren Merkmale in Bildern, die aufgrund ihrer lokalen Umgebung markant und deshalb leicht wiederzuerkennen sind. Zu einem Merkmal werden sogenannte Features - Featurevektoren oder -deskriptoren - berechnet, die das Merkmal möglichst kurz und prägnant beschreiben. Beispiele für solche Verfahren sind z. B. gradientenbasierte Feature-Deskriptoren wie SIFT und SURF Features oder binäre Feature-Deskriptoren wie BRIEF, FAST, ORB oder BRISK Features. Die Verwendung eines Feature-Detektions-Verfahrens hat den Vorteil, dass die Bilder besonders unterscheidungskräftiger Strukturpunkte für die Berechnung der Koordinaten des linken und/oder rechten Augenabschnitts herangezogen werden, wodurch Genauigkeit des Verfahrens erhöht wird.

Feature-Matching-Verfahren werden verwendet, um zu einem Merkmal Kandidaten in anderen Bildern zu finden, die mit hoher Wahrscheinlichkeit Abbildungen desselben Merkmals sind. Diese Verfahren sind deshalb in der Lage, unter den in den verschiedenen ersten und weiteren Abbildungen detektierten Bildern von Strukturpunkten diejenigen zu finden, die zu demselben Strukturpunkt im Raum gehören. Dafür werden Ähnlichkeitsmaße definiert, die aussagen, wie ähnlich zwei Features einander sind. Wird z. B. ein bestimmter Ähnlichkeits-Schwellwert überschritten, so werden die zugehörigen Features als Kandidaten für ein "Matching", also für ein Abbild desselben Features, klassifiziert. Da in Bildern meist sehr viele Features detektiert werden, ist eine effiziente Implementierung der Ähnlichkeitsmaße z. B. mittels Baumstrukturen sinnvoll, um die Laufzeit zu reduzieren. Die Verwendung eines Feature-Matching-Verfahrens hat den Vorteil, dass die detektierten Features in den verschiedenen Aufnahmen besonders effizient und mit hoher Genauigkeit einander zugeordnet werden können, was die Genauigkeit des Verfahrens erhöht und Rechenzeit einspart.

Feature-Detektions-Verfahren und Feature-Matching-Verfahren sind z. B. in dem Buch "Visual Object Recognition" von K. Graumann und B. Laibe, Morgan & Claypool Publishers, 2011 beschrieben, auf das hiermit vollumfänglich Bezug genommen und deren Offenbarung in die Beschreibung dieser Erfindung einbezogen wird.

Um aus den Matchings der Features in den verschiedenen Aufnahmen auf die Koordinaten der Strukturpunkte schließen zu können, ist die Kenntnis intrinsischer und extrinsischer Parameter der Bilderfassungseinrichtung erforderlich.

Für das Berechnen der Koordinaten können z. B. Tiefenschätzungs- oder 3D-Rekonstruktionsverfahren verwendet werden.

Um passende Bilder von Strukturpunkten des vorderen Augenabschnitts des linken und/oder rechten Auges zu finden, ist es von Vorteil, wenn der vordere Augenabschnitt des linken und/oder rechten Auges in den verschiedenen ersten und zweiten Abbildungen segmentiert wird. Der Suchbereich für geeignete Strukturpunkte kann auf diese Weise auf die segmentierte Region des vorderen Augenabschnitts des linken und/oder rechten Auges beschränkt werden. Diese Maßnahme erhöht die Genauigkeit des Verfahrens, indem falsche Detektionen außerhalb des vorderen Augenabschnitts vermieden werden, und spart zusätzlich Rechenzeit ein, da nur der segmentierte Bereich durchsucht werden muss.

Zu bemerken ist, dass die wenigstens zwei ersten Abbildungen und die wenigstens zwei zweiten Abbildungen mittels wenigstens einer Bilderfassungseinrichtung erfasst werden können, die relativ zu dem Kopf des Brillenträgers verlagert wird, indem die Bilderfassungseinrichtung und/oder der Kopf des Brillenträgers bewegt wird.

Dabei sind mehrere Alternativen denkbar. Bevorzugt werden die Aufnahmen mit einer einzigen verlagerbaren Bilderfassungseinrichtung erfasst, die vor dem Kopf des Brillenträgers entlang einer Trajektorie bewegt wird. Dies hat zwei Vorteile: Zum einen sind die Aufnahmen dann nämlich mit geringem operativem Aufwand kostengünstig erfassbar, da eine einzige Bilderfassungseinrichtung ausreicht. Zum anderen können die Aufnahmen von dem Brillenträger selbst grundsätzlich an einem beliebigen Ort erfasst werden ohne dass ein Gang zum Optiker notwendig ist, was den Bestellvorgang wesentlich erleichtert.

Die Bilderfassungseinrichtung kann z. B. in eine von Hand gehaltene Vorrichtung integriert sein, z. B. in ein Smartphone oder in einen Tablet-Computer oder in eine Kamera. Diese kann z. B. vom Brillenträger selbst oder von einer anderen Person gehalten werden. Von Vorteil ist es, wenn die von Hand gehaltene Vorrichtung Lagesensoren aufweist, die Lagesignale bereitstellen, die ein Ausrichten der Bilderfassungseinrichtung auf den Kopf des Brillenträgers unterstützen können. Zu bemerken ist, dass es auch möglich ist, eine ortsfeste unbewegliche Bilderfassungseinrichtung zu verwenden, relativ zu der der Brillenträger den Kopf bewegt. Das hat den Vorteil, dass auch größere feststehende Messgeräte, z. B. für ein Geschäft, mit nur einer Bilderfassungseinrichtung hergestellt werden können. Dies spart Platz, insbesondere, wenn die Bilderfassungseinrichtungen den Kopf aus stark unterschiedlichen Aufnahmepositionen heraus erfassen, und ist kostengünstig.

Schließlich ist es auch denkbar, mehrere Bilderfassungseinrichtungen für die Abbildungen aus verschiedenen Aufnahmepositionen relativ zum Kopf zu verwenden. Diese können entweder ortsfest an unterschiedlichen Stellen im Raum angebracht sein oder relativ zu dem Kopf des Brillenträgers entlang von Trajektorien bewegt werden. Der Vorteil der Verwendung mehrerer Bilderfassungseinrichtungen, bevorzugt einer Vielzahl von Bilderfassungseinrichtungen an verschiedenen Positionen im Raum, liegt in einer höheren Genauigkeit des Verfahrens, da bekannte Relationen zwischen der Position und Lage der Bilderfassungseinrichtungen die Berechnung der extrinsischen Kameraparameter erleichtern oder sogar überflüssig machen. Insbesondere die Berechnung von Koordinaten zu Strukturpunkten des Kopfes, insbesondere des vorderen Augenabschnitts des linken und/oder rechten Auges, sowie der Koordinaten der Brillenfassung wird dadurch robuster und einfacher. Auch wird durch die Verwendung mehrerer Bilderfassungseinrichtungen Rechenzeit eingespart, da im Optimalfall die Berechnung der intrinsischen und/oder extrinsischen Parameter der Bilderfassungseinrichtungen im Vorfeld des Verfahrens erfolgen kann und auch nur einmal durchgeführt werden muss.

Es ist auch denkbar, eine Film- oder Videosequenz des Kopfes anhand einer oder mehrerer Bilderfassungseinrichtungen und/oder bei Drehung des Kopfes aufzunehmen. Das hat den Vorteil, dass eine Vielzahl von ersten und zweiten Abbildungen zu einer Vielzahl von unterschiedlichen Aufnahmepositionen verfügbar ist, die nur gering voneinander abweichen. Dadurch kann die Genauigkeit des Verfahrens verbessert werden.

Unter einer Bilderfassungseinrichtung versteht die Erfindung eine Einrichtung für das digitale Erfassen von Bildern. Eine Bilderfassungseinrichtung kann z. B. ein Bestandteil einer digitalen Kamera sein. Eine Bilderfassungseinrichtung im Sinne der Erfindung kann allerdings z. B. auch ein Bestandteil eines Mobiltelefons, eines Smartphones, eines Tablet-Computers, einer Stereokamera, einer plenoptischen Kamera oder einer Multikamera sein. Eine Bilderfassungseinrichtung im Sinne der Erfindung hat eine Bildebene und enthält vorzugsweise einen Bildsensor-Chip mit wenigstens einem Objektiv.

Eine erfindungsgemäße Vorrichtung zum Vermessen der lokalen Brechkraft oder der Brechkraftverteilung eines linken und/oder rechten Brillenglases kann insbesondere als ein mobiles Endgerät ausgebildet sein, das eine digitale Kamera oder mehrere digitale Kameras enthält.

Indem für das Vermessen der lokalen Brechkraft und/oder der Brechkraftverteilung eines Brillenglases ein mobiles Endgerät mit wenigstens zwei Bilderfassungseinrichtungen eingesetzt wird, z. B. zwei digitale Kameras mit jeweils einer Bilderfassungseinrichtung, eine Stereokamera mit zwei Bilderfassungseinrichtungen, eine Multikamera mit mehreren Bilderfassungseinrichtungen, ein Kamerachip mit wenigstens zwei Objektiven oder eine plenoptische Kamera eingesetzt wird, ergeben sich insbesondere folgende Vorteile:

Für die Bestimmung der lokalen Brechkraft eines linken Brillenglases kann es dann genügen, aus einer einzigen Relativposition des mobilen Endgeräts zu dem Kopf des Brillenträgers heraus zweite Abbildungen von dessen Kopf mit einem vorderen Augenabschnitt eines linken Auges mit wenigstens einem Strukturpunkt darin zu erfassen, wobei das linke Auge eine zu der Aufnahmeposition weisende Blickrichtung hat und wobei ein den wenigstens einen Strukturpunkt abbildender Abbildungsstrahlengang das linke Brillenglas durchsetzt, und/oder zweite Abbildungen mit einem Bild des wenigstens einen Strukturpunkts des vorderen Augenabschnitts des linken Auges ohne das linke Brillenglas der Brillenfassung oder ohne die Brillenfassung, enthaltend das linke Brillenglas, oder mit dem linken Brillenglas zu erfassen, wobei der dem Bild des wenigstens einen Strukturpunkts des vorderen Augenabschnitts des linken Auges zugrundeliegende Abbildungsstrahlengang bei dem Erfassen weder das linke noch das rechte Brillenglas in der Brillenfassung durchsetzt.

Für die Bestimmung der lokalen Brechkraft eines rechten Brillenglases kann es ausreichend sein, eine einzige Abbildung des Kopfes mit einem vorderen Augenabschnitt eines rechten Auges mit wenigstens einem Strukturpunkt darin zu erfassen, wobei das rechte Auge eine zu der Aufnahmeposition weisende Blickrichtung hat und wobei ein den wenigstens einen Strukturpunkt abbildender Abbildungsstrahlengang das rechte Brillenglas durchsetzt, und/oder eine einzige zweite Abbildung mit einem Bild des wenigstens einen Strukturpunkts des vorderen Augenabschnitts des rechten Auges ohne das rechte Brillenglas der Brillenfassung oder ohne die Brillenfassung, enthaltend das rechte Brillenglas, oder mit dem rechten Brillenglas zu erfassen, wobei der dem Bild des wenigstens einen Strukturpunkts des vorderen Augenabschnitts des rechten Auges zugrundeliegende Abbildungsstrahlengang bei dem Erfassen weder das linke noch das rechte Brillenglas in der Brillenfassung durchsetzt.

Zur Erhöhung der Genauigkeit des Verfahrens gemäß Anspruch 1 werden bevorzugt wenigstens zwei erste solche Abbildungen und wenigstens zwei zweite solche Abbildungen erstellt.

Eine vorteilhafte Ausführungsform der Erfindung sieht vor, dass eine Vielzahl erster Abbildungen des Kopfes mit einem linken und/oder rechten vorderen Augenabschnitt inklusive des Brillenglases, dessen Brechkraftverteilung ermittelt werden soll und das sich bevorzugt in einer Brillenfassung befindet, und dass eine Vielzahl zweiter Abbildungen des Kopfes erfasst werden.

Bei Aufnahme der Vielzahl zweiter Abbildungen kann die Brillenfassung vom Kopf entfernt werden. Für die Erfassung einer Vielzahl erster Abbildungen des Kopfs des Brillenträgers und einer Vielzahl zweiter Abbildungen des Kopfs des Brillenträgers ist es von Vorteil, wenn diese wenigstens einen Teil einer Hemisphäre oder eine Hemisphäre jeweils um den Kopf herum aufspannen oder eine Vielzahl von Beobachtungsrichtungen oder Beobachtungsabständen einnehmen.

Indem eine Vielzahl von Abbildungen des Kopfs des Brillenträgers mit und ohne Brillenfassung und darin aufgenommenen Brillengläsern erfasst werden, kann die Genauigkeit des Verfahrens zum Vermessen der Brechkraftverteilung eines linken und/oder eines rechten Brillenglases, vorzugsweise in einer Brillenfassung, erhöht werden.

Indem mittels wenigstens einer Bilderfassungseinrichtung eine Vielzahl von Abbildungen der Szene unter Verlagerung der wenigstens einen Bilderfassungseinrichtung oder bei ortsfester wenigstens einer Bilderfassungseinrichtung unter Drehung des Kopfes erfasst werden, wobei die Blickrichtung des linken Auges und/oder des rechten Auges des Brillenträgers zu der jeweiligen Aufnahmeposition weist und aus der Vielzahl von dabei erfassten Abbildungen Durchblickstrahlengänge für verschiedene Durchblickrichtungen des linken Auges und/oder des rechten Auges des Brillenträgers der Brillenfassung durch das linke Brillenglas und/oder das rechte Brillenglas berechnet werden und für eine jede Durchblickrichtung eine lokale Brechkraft k(x, y) des linken Brillenglases und/oder des rechten Brillenglases bestimmt wird, ist es möglich, zu einer Blickrichtung des Brillenträgers die Brechkraftverteilung der Brillengläser in der von dem Brillenträger getragenen Brillenfassung zu bestimmen.

Die Vermessung der Brechkraftverteilung eines linken und eines rechten Brillenglases in einer Brillenfassung erlaubt insbesondere Aussagen über sogenannte binokulare Wirkungen einer Brille, d. h. einer Brillenfassung inklusive beider Brillengläser. Unter einer binokularen Wirkung ist die Beurteilung der dioptrischen Wirkung des linken und rechten Brillenglases für eine bestimmte Blickrichtung zu verstehen. Eine binokulare Wirkung kann auch Abbildungsfehler des Brillenglases, die höherer Ordnung sind, wie z. B. Koma oder auch prismatische Fehler, umfassen.

Die Vermessung der Brechkraftverteilung eines linken und eines rechten Brillenglases in einer Brillenfassung ermöglicht zu erkennen, ob bei einer bestimmten Blickrichtung, z. B. die astigmatische Wirkung umfassend die Differenz der Brechkraft in den Hauptschnitten und deren Richtung, des Brillenglases signifikant von den binokularen Zielwerten abweicht. Unter den binokularen Zielwerten ist hierbei die subjektiv ermittelte Refraktion, umfassend Sphäre, Zylinder mit Achse sowie Prisma mit Basislage, beider Augen zu verstehen. Für den Brillenträger ist eine Abweichung von den binokularen Zielwerten nicht oder nur wenig bemerkbar, wenn z. B. die Abweichung der astigmatischen Wirkung des linken und rechten Brillenglases von den binokularen Zielwerten gleich ist. Für den Brillenträger ist diese Abweichung von den binokularen Zielwerten jedoch deutlich bemerkbar, wenn die Abweichung der astigmatischen Wirkung des linken und rechten Brillenglases von den binokularen Zielwerten verschieden ist.

Eine nicht korrekte prismatische Wirkung zwischen dem rechten und linken Brillenglas ist für einen Brillenträger sehr unangenehm. Eine nicht korrekte nasale prismatische Wirkung wird von einem Brillenträger eher akzeptiert als eine nicht korrekte temporale prismatische Wirkung und/oder eine nicht korrekte höhenprismatische Wirkung. Das vorstehend angegebene Verfahren ermöglicht durch die gleichzeitige Vermessung eines rechten und linken Brillenglases die Abweichung der prismatischen Wirkung des linken und rechten Brillenglases in der Tragesituation von einem binokularen Zielwert zu bestimmen.

Die Erfindung beruht insbesondere auf dem Gedanken, dass das Aufnehmen einer Vielzahl von Abbildungen, insbesondere das Aufnehmen einer Film- bzw. Videosequenz, mit wenigstens einer Bilderfassungseinrichtung aus unterschiedlichen Aufnahmepositionen und/oder Aufnahmerichtungen heraus das Berechnen extrinsischer Parameter der Bilderfassungseinrichtung und/oder von Koordinaten von Strukturpunkten des Kopfes mittels Bildverarbeitung z. B. unter Verwendung von SLAM-Algorithmen, d. h. Algorithmen für das gleichzeitige Lokalisieren und Abbilden (Simultaneous Localization and Mapping) ermöglicht, wie dies in der Publikation "A. Teichmann et al., Unsupervised intrinsic calibration of depth sensors via SLAM, Robotics: Science and Systems 2013, Berlin Germany, June 24 - 28, 2013" beschrieben ist, auf die hiermit vollumfänglich Bezug genommen und deren Offenbarung in die Beschreibung dieser Erfindung einbezogen wird.

Ein SLAM-Algorithmus ermöglicht insbesondere, aus Abbildungen ein- und derselben Szene, die aus verschiedenen Aufnahmepositionen erfasst sind und die deshalb die Szene aus unterschiedlichen Perspektiven zeigen, sowohl eine dreidimensionale Geometrie der Szene als auch die Positionen der wenigstens einen Bilderfassungseinrichtung zu berechnen, die diese beim Erfassen von Abbildungen der Szene jeweils eingenommen hat. Ein SLAM-Algorithmus umfasst eine Feature-Detektions-Routine, die in der Szene vorhandene Merkmale detektiert, und eine Feature-Matching-Routine, mittels der für jedes Merkmal in einer Aufnahme das korrespondierende Merkmal in den aus unterschiedlichen Aufnahmepositionen aufgenommenen Bildern wiedererkannt wird. Aus den korrespondierenden Positionen jedes Merkmals in den Bildaufnahmen wird dann anhand der intrinsischen und extrinsischen Parameter der wenigstens einen Bilderfassungseinrichtung ein dreidimensionales Modell der Szene erstellt.

Die Genauigkeit solcher SLAM-Algorithmen, insbesondere eines SLAM-Algorithmus, welcher die extrinsischen Parameter der wenigstens einen Bilderfassungseinrichtung und/oder die Position der Strukturpunkte in der Abbildung berechnet, ist von der Genauigkeit der Kalibrierung der wenigstens einen Bilderfassungseinrichtung bestimmt. Eine solche Kalibrierung ist in der Lage, jeder Pixelkoordinate der wenigstens einen Bilderfassungseinrichtung einen dreidimensionalen, in die jeweilige Bilderfassungseinrichtung einfallenden Abbildungsstrahlengang zuzuordnen.

Unter einer Kalibrierung einer Bilderfassungseinrichtung versteht die Erfindung das Ermitteln ihrer intrinsischen und/oder extrinsischen Parameter.

Unter den intrinsischen Parametern einer Bilderfassungseinrichtung versteht die Erfindung die Brennweite $f$, die Koordinaten des Bildzentrums $Z_x$ und $Z_y$, den Scherungsparameter $s$ sowie die Skalierungs-parameter $m_x$ und $m_y$ aufgrund unterschiedlich skalierter Koordinatenachsen der Bildebene. Mathematisch lassen sich die intrinsischen Parameter als ein intrinsischer Kalibrierungsoperator $\overline{K}$ ausdrücken

$$\overline{K} = \begin{pmatrix} f \cdot m_x & s & Z_x \cdot m_x \\ 0 & f \cdot m_y & Z_y \cdot m_y \\ 0 & 0 & 1 \end{pmatrix}.$$

Zu den intrinsischen Parametern können zusätzlich auch Verzerrungsparameter gezählt werden, die zur Bestimmung von Bildverzerrungen, insbesondere der radialen und tangentialen Verzerrung, dienen. Die intrinsischen Parameter beschreiben, wie eine Koordinate im Koordinatensystem einer Bilderfassungseinrichtung auf die zugehörige Bildebene abgebildet wird bzw. wie aus einem gegebenen Punkt auf der Bildebene der zugehörige Abbildungsstrahlengang im Koordinatensystem der Bilderfassungseinrichtung berechnet werden kann.

Die intrinsischen Parameter der wenigstens einen Bilderfassungseinrichtung, d. h. der Kamerakalibrierungsoperator $\overline{K}$, kann z. B. aus wenigstens zwei Abbildungen eines speziellen Kalibriermusters, z. B. eines Schachbrettmusters oder eines Punktemusters mittels der wenigstens einen Bilderfassungseinrichtung bestimmt werden. Alternativ hierzu ist es auch möglich, durch Auswerten einer Vielzahl von Abbildungen wenigstens einer Szene direkt aus der Vielzahl von Abbildungen der Szene, denen unterschiedliche Aufnahmepositionen zugrunde liegen können, den intrinsischen Kamerakalibrierungsoperator $\overline{K}$ zu bestimmen. Für das Berechnen intrinsischer Parameter der Bilderfassungseinrichtung kann also auch ein SLAM-Algorithmus verwendet werden. Dies hat den Vorteil, dass keine umständlichen Kalibrierverfahren vor dem Einsatz der Bilderfassungseinrichtung durchgeführt werden müssen, um diese Parameter zu bestimmen. Stattdessen können diese direkt bei der Ausführung des SLAM-Algorithmus mitgeschätzt werden. Dies spart Aufwand und Rechenzeit.

Unter den extrinsischen Parametern einer Bilderfassungseinrichtung versteht die Erfindung die Position und Lage der Bilderfassungseinrichtung im Raum relativ zu einem festen Bezugskoordinatensystem. Die Position bezeichnet dabei den Punkt im Raum in Bezug auf das Bezugskoordinatensystem, an dem sich das Zentrum der Bilderfassungseinrichtung befindet. Die Lage bezeichnet die Rotation der Bilderfassungseinrichtung wiederum in Bezug auf das Bezugskoordinatensystem. Das Bezugskoordinatensystem kann z. B. durch die Position und Lage einer Bilderfassungseinrichtung bei einer der Aufnahmen gegeben sein oder auch durch einen Punkt des Kopfes des Brillenträgers zusammen mit einer Ausrichtung, die durch weitere Punkte des Kopfes bestimmt sein kann, oder durch einen Punkt und einen Abschnitt der Brillenfassung auf dem Kopf.

Die Lage einer Bilderfassungseinrichtung wird dabei durch einen Rotationsoperator

$$\overline{R} = \begin{pmatrix} R_{11} & R_{12} & R_{13} \\ R_{21} & R_{22} & R_{23} \\ R_{31} & R_{32} & R_{33} \end{pmatrix}$$

mit
det $\overline{R}$ = 1,
der die Rotation der Bilderfassungseinrichtung um das Kamerazentrum relativ zu dem Bezugskoordinatensystem festlegt, beschrieben. Die Position einer Bilderfassungseinrichtung wird durch einen Translationsvektor

$$\vec{T} = \begin{pmatrix} t_1 \\ t_2 \\ t_3 \end{pmatrix},$$

der die Verschiebung des Kamerazentrums relativ zu dem Ursprung des Bezugskoordinatensystems festlegt, beschrieben. Eine Koordinate c im Raum wird durch die Abbildungsvorschrift

$$f(c) = \overline{K} \cdot (\overline{R} \cdot c + \overline{T})$$

und der Berechnung der zugehörigen zwei-dimensionalen inhomogenen Koordinaten mittels Division des Ergebnisvektors durch seine dritte Koordinate auf den entsprechenden Punkt auf der Bildebene der Bilderfassungseinrichtung abgebildet.

Umgekehrt kann zu einer Koordinate y in homogenen Koordinaten auf der Bildebene der Bilderfassungseinrichtung anhand der Abbildungsvorschrift

$$g(y) = \overline{R}^T \cdot (\overline{K}^{-1} \cdot y - \overline{T})$$

der zugehörige Abbildungsstrahlengang bestimmt werden, der auf diese Koordinate abgebildet wird.

Intrinsische und extrinsische Parameter einer Bilderfassungseinrichtung, zugehörige Abbildungsvorschriften sowie die Kalibrierung von Bilderfassungseinrichtung sind im Detail in dem Buch "Multiple View Geometry" von R. Hartley und A. Zisserman, Cambridge University Press 2004 erläutert

Aus der Vielzahl von Abbildungen des Kopfes werden dann Koordinaten des wenigstens einen Strukturpunkts des Kopfes, der Brillenfassung sowie extrinsische Parameter der wenigstens einen Bilderfassungseinrichtung für eine jede erfasste Abbildung bestimmt. Daraus werden dann Strahlengänge durch die Brillengläser ermittelt, um aus deren Ablenkung durch das linke und/oder rechte Brillenglas dann die Brechkraftverteilung des linken und/oder rechten Brillenglases zu bestimmen.

Eine vorteilhafte Weiterbildung der Erfindung sieht deshalb vor, dass für das Berechnen der Koordinaten der Strukturpunkte des Kopfes und/oder extrinsischer Parameter der wenigstens einen Bilderfassungseinrichtung umfassend deren Position und Lage im Raum bei dem Erfassen der wenigstens zwei ersten und/oder wenigstens zwei zweiten Abbildungen ein SLAM-Algorithmus verwendet wird.

Durch die Verwendung eines SLAM-Algorithmus können intrinsische und/oder extrinsische Parameter der wenigstens einen Bilderfassungseinrichtung und/oder die Koordinaten zu den Strukturpunkten des Kopfes mit höherer Genauigkeit und auch unter Einsparung von Rechenzeit ermittelt werden. Die Genauigkeit der Berechnungen kann z. B. durch den Einsatz von "Bundle Adjustment" Verfahren erhöht werden.

Mittels der vorstehend beschriebenen Kalibrierung kann der SLAM-Algorithmus jedem Bild eines Strukturpunkts in den zweiten Abbildungen eine Vielzahl von dreidimensionalen, in die jeweilige Bilderfassungseinrichtung einfallenden Abbildungsstrahlengänge zuordnen, die kein Brillenglas passieren.

Aus diesen können dann die Koordinaten der Strukturpunkte des linken und/oder rechten vorderen Augenabschnitts und/oder von Strukturpunkten des übrigen Kopfes bestimmt werden. Aus den erfassten ersten Abbildungen der Strukturpunkte, welche durch das rechte und/oder linke Brillenglas von der wenigstens einen Bilderfassungseinrichtung beobachtet wurden, den aus den zweiten Aufnahmen berechneten Koordinaten, die jeweils anhand der angenommenen Blickrichtung des Brillenträgers zu einer ersten Aufnahme korrigiert werden, lässt sich eine Vielzahl von Abbildungsstrahlengängen bestimmen, welche das rechte und/oder linke Brillenglas an einem Ort der Brechung durchsetzen. Das so aufgespannte Strahlenmodell wird bevorzugt verwendet, um die dioptrische Wirkung des linken und/oder rechten Brillenglases zu ermitteln.

Die optische Wirkung der Brillengläser für den Brillenträger lässt sich beschreiben als die Ableitung der räumlichen Strahlablenkungen in dem Strahlenmodell. Um die lokale Brechkraft in der Nähe eines Orts der Brechung auf dem Brillenglas zu bestimmen, kann deshalb ein lokales Gradientenfeld aus der Ablenkung der Strahlengänge durch das Brillenglas berechnet werden.

Eine vorteilhafte Weiterbildung der Erfindung sieht deshalb vor, dass die lokale Brechkraft des linken Brillenglases aus der Ableitung eines Gradientenfelds, das aus der Ablenkung des Abbildungsstrahlengangs für das Bild des wenigstens einen Strukturpunkts des vorderen Augenabschnitts des linken Auges durch das linke Brillenglas der Brillenfassung ermittelt wird, mittels eines Optimierungsverfahrens berechnet wird und/oder dass die lokale Brechkraft des rechten Brillenglases aus der Ableitung eines Gradientenfelds, das aus der Ablenkung des Abbildungsstrahlengangs für das Bild des wenigstens einen Strukturpunkts des vorderen Augenabschnitts des rechten Auges durch das rechte Brillenglas der Brillenfassung ermittelt wird, mittels eines Optimierungsverfahrens berechnet wird.

Durch Ableitung des Gradientenfelds in definierten Richtungen kann eine Krümmung des Brillenglases ermittelt werden, welcher die Brechkraft der Linse entspricht. Außerdem können die Hauptachsen einer zylindrischen Wirkung bestimmt werden. Anhand eines Optimierungsverfahrens kann die Position, Form, Lage sowie ein Brechungsindex des Materials der Brillengläser ermittelt werden. Ein Vorteil dieser Berechnungsmethode über ein lokales Gradientenfeld ist, dass dadurch Rechenzeit eingespart wird.

Über einen sogenannten inversen Ansatz, wie er z. B. in der Publikation von K.N. Kutukalos und E. Steger, "A Theory of Refractive and specular 3D Shape by Light-Path Triangulation", International Journals of Computer Vision, 2008, Band 76, Ausgabe 1, Seiten 13 - 29, beschrieben ist, auf die hiermit vollumfänglich Bezug genommen und deren Offenbarungsgehalt in die Beschreibung dieser Erfindung mit einbezogen wird, ist es z. B. dann möglich, sowohl die Position als auch die Form und Lage sowie den Brechungsindex des Materials des linken und rechten Brillenglases in der Brillenfassung der Brille zu bestimmen und damit auch deren optische Wirkung für einen Brillenträger.

Ein mathematisches Problem wird als ein inverses Problem bezeichnet, wenn ausgehend von einem beobachteten Ergebnis eines Prozesses auf die diesem ursprünglich zu Grunde liegende Ursache geschlossen werden soll. Inverse Probleme sind oft schlecht gestellt, d. h. dass der Prozess nicht invertierbar ist und somit die Ursache nicht exakt berechnet werden kann. Ein typisches inverses Problem in der Bildverarbeitung ist z. B. die Berechnung des Ursprungsbilds aus einem verwackelten Bild ohne Kenntnis des Abbildungsoperators. Ein inverser Ansatz ist eine Umkehrung der sogenannten Vorwärtsrechnung. Anhand eines inversen Ansatzes kann in einer optischen Strahldurchrechnung, die auch als Raytracing bezeichnet wird, der Verlauf von Lichtstrahlen durch ein optisches System bestehend aus bekannten optischen Grenzflächen und bekannten Brechungsindizes zwischen den Grenzflächen berechnet werden.

Vorausgesetzt, dass die Grenzflächen, deren Normalen und die Brechungsindizes bekannt sind, ist es möglich, einen jeden Lichtstrahl durch das System eindeutig zu berechnen. Im Falle des inversen Ansatzes wird dabei eine optische Grenzfläche oder ein Brechungsindex gesucht, die bzw. der zu einer gegebenen Anzahl von Lichtstrahlen passt. Um eine Fehlergröße zu bestimmen, wird die Vorwärtsrechnung anhand der mittels des "inversen Ansatzes" bestimmten Fläche durchgeführt und es wird dann ein Vergleich von Strahlpunkten vor und/oder hinter der jeweiligen Grenzfläche erstellt. Durch Variation der zu bestimmenden Fläche wird dann gezielt mittels eines Optimierungsverfahrens die Fehlergröße minimiert. Alternativ zu reinen Optimierungsverfahren, die durch Parametervariationen das Minimum einer Fehlerfunktion ermitteln können, ist es möglich, hier sogenannte Lichtpfad-Triangulationsverfahren zum Einsatz zu bringen, die auch in Kombination mit einem Optimierungsverfahren genutzt werden. Derartige Verfahren sind z. B. bekannt aus der vorstehend erwähnten Publikation "K.N. Kutukalos und E. Steger, A Theory of Refractive and specular 3D Shape by Light-Path Triangulation, University of Toronto".

Ein Vorteil der Verwendung eines inversen Ansatzes ist, dass dadurch eine höhere Genauigkeit erzielt werden kann.

Alternativ kann zur Bestimmung der Brechkraft auch eine Linse als Näherung der realen Linse aus zwei Flächen und einem Brechungsindex modelliert werden.

Eine vorteilhafte Weiterbildung des Verfahrens sieht deshalb vor, dass zur Bestimmung der lokalen Brechkraft des linken Brillenglases eine Linse modelliert wird, die zwei Flächen und einen Linsenmaterial-Brechungsindex aufweist, wobei Krümmungsradien wenigstens einer der Flächen sowie der Linsenmaterial-Brechungsindex der Linse in einem Optimierungsverfahren berechnet werden und/oder dass zur Bestimmung der lokalen Brechkraft des rechten Brillenglases eine Linse modelliert wird, die zwei Flächen und einen Linsenmaterial-Brechungsindex aufweist, wobei Krümmungsradien wenigstens einer der Flächen sowie der Brechungsindex der Linse in einem Optimierungsverfahren berechnet werden.

Vorzugsweise ist für eine Linse eine der Flächen torisch, die andere sphärisch. Diese Modellierung der Linsen hat den Vorteil einer erhöhten Genauigkeit, da die Parameter der Linsen direkt optimiert werden können.

Mittels eines iterativen Optimierungsverfahrens kann eine bestpassende Kombination der die Flächen beschreibenden Parameter und der Brechungsindizes der Linsen ermittelt werden und es kann daraus die Brechkraft der Linsen in der lokalen Umgebung des Durchblickpunkts am Brillenglas bestimmt werden. Das Optimierungsverfahren kann hierbei ebenfalls als ein inverser Ansatz ausgebildet sein.

Um eine Brechkraftverteilung für ein gesamtes Brillenglas zu bestimmen, wird die obenstehende Berechnung für eine Vielzahl von ersten Bildern aus unterschiedlichen Aufnahmepositionen ausgeführt. Die Brechkraftverteilung eines linken und/oder eines rechten Brillenglases in einer Brillenfassung wird also bestimmt, indem eine lokale Brechkraft des linken und/oder rechten Brillenglases an einer Vielzahl von unterschiedlichen Stellen des linken und/oder rechten Brillenglases nach einem der oben beschriebenen Verfahren vermessen wird.

Für die Vermessung von Einstärkengläsern reicht die Ausführung der vorstehenden Verfahrensschritte für einen möglichst zentralen Durchblickpunkt der Brille aus. Daraus können Größen wie die sphärische und zylindrische Wirkung in Wert und Richtung sowie binokularische Prismenwerte ermittelt werden.

Zur Vermessung von Mehrstärken- oder Gleitsichtgläsern muss das Verfahren an anderen Durchblickzonen der Brille wiederholt werden. Im einfachsten Fall würden eine Aufnahme der Ferne und eine der Nähe für den Lesebereich ausreichen. Es ist allerdings ebenfalls vorstellbar beliebig viele Durchblickpunkte zu vermessen. Einzig zwingende Randbedingung ist es, dass der Brillenträger immer den Blick in die Bilderfassungseinrichtung richtet, da nur so der exakte Ort der Pupille, berechnet werden kann. Es ist nicht nötig, dass der Brillenträger die Bilderfassungseinrichtung durch die von ihm getragene Brille scharf sieht. Folglich ist es ebenfalls möglich, die gesamte Brille durch Schwenken der Kamera im gesamten Sehfeld zu vermessen. So ist es möglich Aussagen über ein Gleitsichtdesign zu treffen. Zu ermittelnde Werte für ein Gleitsichtdesign sind z. B. "hartes" oder "weiches" Design, Progressionslänge oder -breite.

Ein erfindungsgemäßes Computerprogrammprodukt enthält ein Computerprogramm mit Programmcode zur Durchführung der vorstehend angegebenen Verfahrensschritte, wenn das Computerprogramm in eine Rechnereinheit geladen und/oder in einer Rechnereinheit durchgeführt wird.

Eine erfindungsgemäße Vorrichtung zum Vermessen der Brechkraftverteilung eines linken und/oder eines rechten Brillenglases in einer Brillenfassung enthält wenigstens eine Bilderfassungseinrichtung und eine Rechnereinheit, in die ein Computerprogramm mit Programmcode zur Durchführung der vorstehend angegebenen Verfahrensschritte geladen ist.

Eine solche Vorrichtung kann insbesondere als ein Smartphone oder als ein Tablet-Computer oder auch als eine digitale Kamera ausgebildet sein.

In einem weiteren Aspekt können das vorstehend beschriebene Verfahren und/oder die vorstehend beschriebene Vorrichtung und/oder das vorstehend beschriebene Computerprogramm zusammen mit wenigstens einem weiteren Verfahren und/oder wenigstens einer weiteren Vorrichtung und/oder einem weiteren Computerprogramm zur Anwendung kommen. Bei diesem wenigstens einen weiteren Verfahren kann es sich beispielsweise um ein Verfahren zur Bestimmung eines Refraktionsfehlers eines Auges eines Nutzers handeln, wobei dieses Verfahren die folgenden Schritte umfasst:

a) Darstellen eines Zeichens auf einem Bildschirm, wobei ein Parameter des auf dem Bildschirm dargestellten Zeichens verändert wird;
b) Erfassen einer Augenbewegungsmetrik des Auges des Nutzers in Abhängigkeit von dem auf dem Bildschirm dargestellten Zeichen; und
c) Feststellen eines Zeitpunkts, zu dem sich aus der Augenbewegungsmetrik des Auges des Nutzers eine Erkennungsschwelle des Nutzers für das auf dem Bildschirm dargestellte Zeichen ergibt; und
d) Bestimmen eines Wertes für den Refraktionsfehler des Auges des Nutzers aus dem zu dem Zeitpunkt festgelegten Parameter.

Alternativ oder zusätzlich zu dem vorstehend beschriebenen Verfahren kann es sich bei dem wenigstens einen weiteren Verfahren beispielsweise auch um ein Verfahren zur Bestimmung mindestens eines optischen Parameters eines Brillenglases handeln, wobei dieses Verfahren folgende Schritte umfasst:

a) Aufnehmen eines Bildes unter Verwendung eines Brillenglases; und
b) Ermitteln mindestens eines optischen Parameters des Brillenglases mittels Bildverarbeitung des Bildes, wobei das Bild eine die Augen einschließende Augenpartie und/oder eine an die Augen angrenzende Gesichtspartie eines Nutzers des Brillenglases umfasst.

Alternativ oder zusätzlich zu den vorstehend beschriebenen Verfahren kann es sich bei dem wenigstens einen weiteren Verfahren beispielsweise auch um ein Verfahren zur Bestimmung eines Refraktionsfehlers eines Auges eines Nutzers handeln, wobei das Verfahren die folgenden Schritte umfasst:

a) Darstellen eines Zeichens auf einem Bildschirm, wobei ein Parameter des auf dem Bildschirm dargestellten Zeichens verändert wird;
b) Erfassen einer Reaktion des Nutzers in Abhängigkeit von dem auf dem Bildschirm dargestellten Zeichen;
c) Feststellen eines Zeitpunkts, zu dem sich aus der Reaktion des Nutzers eine Erkennbarkeit des auf dem Bildschirm dargestellten Zeichens für den Nutzer ergibt; und
d) Bestimmen eines Wertes für den Refraktionsfehler des Auges des Nutzers aus dem zu dem Zeitpunkt festgelegten Parameter, wobei das auf dem Bildschirm dargestellte Zeichen ein periodisches Muster ist, wobei der Parameter des auf dem Bildschirm dargestellten Musters mindestens eine Ortsfrequenz umfasst, und der Wert für den Refraktionsfehler aus der zu dem Zeitpunkt festgelegten Ortsfrequenz des Musters bestimmt wird.

Alternativ oder zusätzlich zu den vorstehend beschriebenen Verfahren kann es bei dem wenigstens einen weiteren Verfahren beispielsweise auch um ein Verfahren zum Vermessen der Brechkraftverteilung eines linken und/oder eines rechten Brillenglases in einer Brillenfassung handeln, in welchem in einem ersten Schritt mittels wenigstens einer Bilderfassungseinrichtung wenigstens eine erste Abbildung einer Szene aus wenigstens einer ersten Aufnahmeposition erfasst wird, wobei diese wenigstens eine erste Abbildung wenigstens zwei Strukturpunkte aufweist und ein linkes und/oder ein rechtes Brillenglas in einer Brillenfassung mit einem ein Koordinatensystem der Brillenfassung definierenden Abschnitt der Brillenfassung enthält, wobei der wenigstens eine Abbildungsstrahlengang für jeden dieser wenigstens zwei Strukturpunkte das erste und/oder das zweite Brillenglas der Brillenfassung jeweils mindestens einmal passiert und mindestens einmal nicht passiert. Jeder Abbildungsstrahlengang umfasst die Position des Strukturpunkts sowie den in die wenigstens eine Bilderfassungseinrichtung einfallenden Hauptstrahl. In einem weiteren Schritt, der zeitlich vor oder nach dem ersten Schritt liegen kann, wird wenigstens eine weitere Abbildung der Szene ohne das erste und/oder das zweite Brillenglas der Brillenfassung oder ohne die Brillenfassung enthaltend das erste und/oder das zweite Brillenglas mit denselben wenigstens zwei Strukturpunkten der ersten Abbildung einer Szene mittels wenigstens einer Bilderfassungseinrichtung aus der ersten Aufnahmeposition oder aus wenigstens einer von der ersten Aufnahmeposition verschiedenen weiteren Aufnahmeposition erfasst. Die wenigstens eine Bilderfassungseinrichtung kann in dem weiteren Schritt identisch oder verschieden zu der wenigstens einen Bilderfassungseinrichtung aus dem ersten Schritt sein. Bevorzugt ist die wenigstens eine Bilderfassungseinrichtung in dem weiteren Schritt identisch zu der wenigstens einen Bilderfassungseinrichtung aus dem ersten Schritt. Darauf werden in einem Schritt des Berechnens die Koordinaten dieser wenigstens zwei Strukturpunkte in einem zu dem Koordinatensystem der Brillenfassung referenzierten Koordinatensystem der Abbildung dieser Szene aus dem jeweiligen wenigstens einen Strahlengang dieser wenigstens zwei Strukturpunkte, welcher das linke und/oder rechte Brillenglas jeweils nicht passiert hat, und der wenigstens einen weiteren Abbildung der Szene mittels Bildauswertung bestimmt. Im Anschluss daran wird die Brechkraftverteilung in einem Schritt des Bestimmens einer Brechkraftverteilung für wenigstens einen Abschnitt des linken Brillenglases in dem Koordinatensystem der Brillenfassung und/oder in einem Schritt des Bestimmens einer Brechkraftverteilung für wenigstens einen Abschnitt des rechten Brillenglases in dem Koordinatensystem der Brillenfassung, jeweils aus den Abbildungsstrahlungsgängen, welche das jeweilige Brillenglas passiert haben, bestimmt.

Alternativ oder zusätzlich zu den vorstehend beschriebenen Verfahren kann es bei dem wenigstens einen weiteren Verfahren beispielsweise auch um ein Verfahren zum Vermessen der Brechkraftverteilung eines linken und/oder eines rechten Brillenglases in einer Brillenfassung handeln, in welchem in einem ersten Schritt mittels wenigstens einer Bilderfassungseinrichtung wenigstens eine erste Abbildung einer Szene aus wenigstens einer ersten Aufnahmeposition erfasst wird, wobei diese wenigstens eine erste Abbildung wenigstens zwei Strukturpunkte aufweist und ein linkes und/oder ein rechtes Brillenglas in einer Brillenfassung mit einem ein Koordinatensystem der Brillenfassung definierenden Abschnitt der Brillenfassung enthält, wobei der wenigstens eine Abbildungsstrahlengang für jeden dieser wenigstens zwei Strukturpunkte das erste und/oder das zweite Brillenglas der Brillenfassung jeweils mindestens einmal passiert und mindestens einmal nicht passiert. Jeder Abbildungsstrahlengang umfasst die Position des Strukturpunkts sowie den in die wenigstens eine Bilderfassungseinrichtung einfallenden Hauptstrahl. In einem weiteren Schritt, der zeitlich vor oder nach dem ersten Schritt liegen oder gleichzeitig mit dem ersten Schritt erfolgen kann, wird wenigstens eine weitere Abbildung der Szene mit dem linken und/oder dem rechten Brillenglas in einer Brillenfassung und mit einem ein Koordinatensystem der Brillenfassung definierenden Abschnitt der Brillenfassung mittels wenigstens einer Bilderfassungseinrichtung aus wenigstens einer von der ersten Aufnahmeposition verschiedenen weiteren Aufnahmeposition mit wenigstens einem Abbildungsstrahlengang für dieselben wenigstens zwei in der ersten Abbildung erfassten Strukturpunkte erfasst, wobei dieser wenigstens eine Abbildungsstrahlengang das erste und/oder das zweite Brillenglas der Brillenfassung jeweils mindestens einmal passiert und mindestens einmal nicht passiert. Darauf werden in einem weiteren Schritt die Koordinaten der wenigstens zwei Strukturpunkte in einem zu dem Koordinatensystem der Brillenfassung referenzierten Koordinatensystem der Szene aus dem jeweiligen wenigstens einen Strahlengang dieser wenigstens zwei Strukturpunkte, welcher das linke und/oder rechte Brillenglas jeweils nicht passiert hat und der wenigstens einen weiteren Abbildung der Szene mittels Bildauswertung berechnet. Anschließend wird die Brechkraftverteilung für wenigstens einen Abschnitt des linken Brillenglases in dem Koordinatensystem der Brillenfassung berechnet und/oder es wird die Brechkraftverteilung für wenigstens einen Abschnitt des rechten Brillenglases in dem Koordinatensystem der Brillenfassung, jeweils aus den Abbildungsstrahlengängen, welche das jeweilige Brillenglas passiert haben, bestimmt.

Bevorzugt wird in den beiden vorstehenden Verfahren zum Vermessen der Brechkraftverteilung eines linken und/oder eines rechten Brillenglases, vorzugsweise in einer Brillenfassung, eine Vielzahl von Strukturpunkten in der jeweils ersten Abbildung einer Szene aus jeweils wenigstens einer ersten Aufnahmeposition erfasst und die jeweils darauf folgenden Schritte anhand dieser jeweiligen Vielzahl von Strukturpunkten vorgenommen. Unter einer Vielzahl von Strukturpunkten werden bevorzugt wenigstens 10, weiter bevorzugt wenigstens 100, besonders bevorzugt wenigstens 1000 und ganz besonders bevorzugt wenigstens 10000 Strukturpunkte verstanden. Insbesondere ist eine Vielzahl von Strukturpunkten $\geq 100$ Strukturpunkte und $\leq 1000$ Strukturpunkte.

In einer übergeordneten Anwendung können die verschiedenen vorstehend beschriebenen Verfahren, d. h. das erfindungsgemäße Verfahren sowie das wenigstens eine weitere Verfahren, kombiniert werden, um beispielsweise aus einem Vergleich der jeweils erhaltenen Ergebnisse eine höhere Genauigkeit oder eine Plausibiltätsüberprüfung der in den einzelnen Verfahren erhaltenen Ergebnisse zu erhalten. Die verschiedenen vorstehend beschriebenen Verfahren können nacheinander oder gleichzeitig in der übergeordneten Anwendung erfolgen. Erfolgen die verschiedenen Verfahren nacheinander kann deren Reihenfolge unabhängig voneinander sein und/oder es kann sich um eine beliebige Reihenfolge handeln. Erfolgen die verschiedenen Verfahren nacheinander kann es bevorzugt sein, wenigstens eines der vorstehend beschriebenen Verfahren zur Bestimmung der Brechkraftverteilung zuletzt durchzuführen. Eine übergeordnete Anwendung kann beispielsweise ein die verschiedenen Verfahren umfassendes Computerprogramm sein.

Nachfolgend werden vorteilhafte Ausführungsbeispiele der Erfindung beschrieben, die in den Zeichnungen schematisch dargestellt sind.

Es zeigen:

Fig. 1    eine Vorrichtung mit einer Bilderfassungseinrichtung zum Vermessen der lokalen Brechkraft eines linken und rechten Brillenglases in einer Brillenfassung mit dem Kopf eines Brillenträgers, der die Brillenfassung trägt;

Fig. 2    eine mittels der Bilderfassungseinrichtung aus einer ersten Aufnahmeposition heraus erfasste erste Abbildung eines Abschnitts des Kopfs des Brillenträgers mit der Brillenfassung;

Fig. 3    eine mittels der Bilderfassungseinrichtung aus einer von der ersten Aufnahmeposition verschiedenen zweiten Aufnahmeposition heraus erfasste weitere erste Abbildung eines Abschnitts des Kopfs des Brillenträgers mit der Brillenfassung;

Fig. 4    eine mittels der Bilderfassungseinrichtung aus einer dritten Aufnahmeposition heraus erfasste weitere erste Abbildung eines Abschnitts des Kopfs des Brillenträgers mit der Brillenfassung;

Fig. 5    die Vorrichtung mit der Bilderfassungseinrichtung zum Vermessen der lokalen Brechkraft eines linken und rechten Brillenglases in einer Brillenfassung mit dem Kopf des Brillenträgers ohne die Brillenfassung, wobei die Blickrichtung des linken und rechten Auges auf die Bilderfassungseinrichtung gerichtet ist;

Fig. 6    eine mittels der Bilderfassungseinrichtung aus einer weiteren Aufnahmeposition heraus erfasste zweite Abbildung eines Abschnitts des Kopfs des Brillenträgers ohne die Brillenfassung;

Fig. 7    eine mittels der Bilderfassungseinrichtung aus einer weiteren Aufnahmeposition heraus erfasste weitere zweite Abbildung eines Abschnitts des Kopfs des Brillenträgers ohne die Brillenfassung;

Fig. 8    eine mittels der Bilderfassungseinrichtung aus einer weiteren Aufnahmeposition heraus erfasste weitere zweite Abbildung eines Abschnitts des Kopfs des Brillenträgers ohne die Brillenfassung;

Fig. 9    die Vorrichtung mit der Bilderfassungseinrichtung zum Vermessen der lokalen Brechkraft eines linken und rechten Brillenglases in einer Brillenfassung mit dem Kopf des Brillenträgers ohne die Brillenfassung und invarianten Blickrichtungen des linken und rechten Auges;

Fig. 10    eine mittels der Bilderfassungseinrichtung aus einer weiteren Aufnahmeposition heraus erfasste zweite Abbildung eines Abschnitts des Kopfs des Brillenträgers ohne die Brillenfassung mit invarianten Blickrichtungen des linken und rechten Auges;

Fig. 11    eine mittels der Bilderfassungseinrichtung aus einer weiteren Aufnahmeposition heraus erfasste weitere zweite Abbildung eines Abschnitts des Kopfs des Brillenträgers ohne die Brillenfassung mit invarianten Blickrichtungen des linken und rechten Auges;

Fig. 12    eine mittels der Bilderfassungseinrichtung aus einer weiteren Aufnahmeposition heraus erfasste weitere zweite Abbildung eines Abschnitts des Kopfs des Brillenträgers ohne die Brillenfassung mit invarianten Blickrichtungen des linken und rechten Auges;

Fig. 13    den Kopf des Brillenträgers mit einem linken Auge und dessen Augenrotationspunkt sowie einem linken Brillenglas und der Bilderfassungseinrichtung;

Fig. 14    den Kopf des Brillenträgers mit einem rechten Auge und dessen Augenrotationspunkt sowie einem rechten Brillenglas und der Bilderfassungseinrichtung; und

Fig. 15    die Vorrichtung mit einer Bilderfassungseinrichtung zum Vermessen der lokalen Brechkraft eines linken und rechten Brillenglases mit einem Abbildungsstrahlengang für einen Strukturpunkt, der das Brillenglas durchsetzt, und mit einem Abbildungsstrahlengang für einen Strukturpunkt, der das Brillenglas nicht durchsetzt.

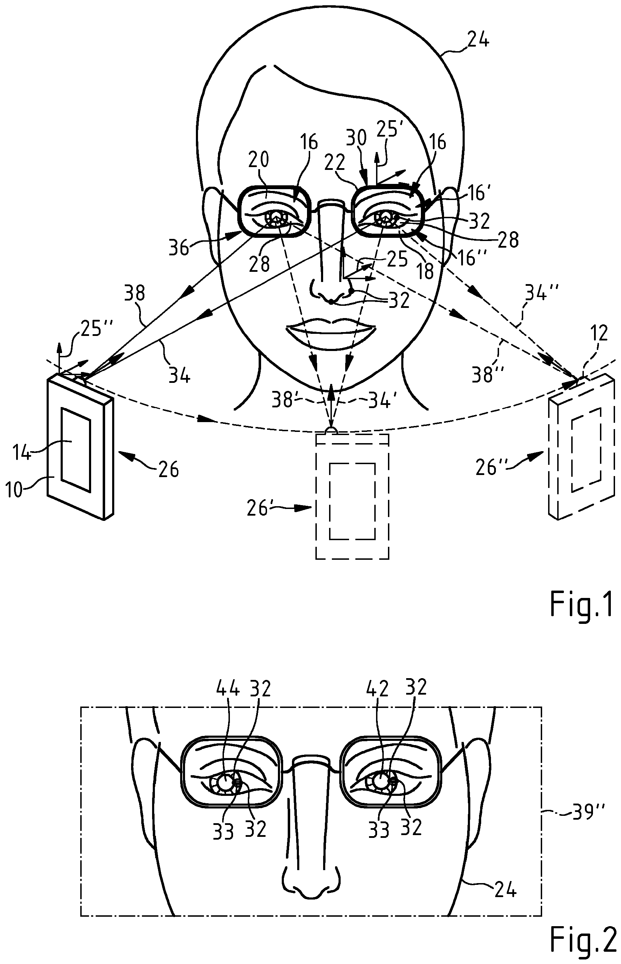

Die in der Fig. 1 gezeigte Vorrichtung 10 ist als ein Smartphone ausgebildet, das eine Bilderfassungseinrichtung 12 mit einem Objektivlinsensystem, das eine Eintrittsblende hat, und einen Bildsensor enthält. In dem Smartphone gibt es eine Rechnereinheit 14, die für das Ausführen von Bildverarbeitungsroutinen ausgelegt ist.

Zu bemerken ist, dass im Rahmen der Erfindung allerdings auch vorgesehen sein kann, dass die Vorrichtung 10 eine verlagerbare Bilderfassungseinrichtung enthält und Bilddaten zu einer stationär angeordneten Rechnereinheit für das Ausführen von Bildverarbeitungsroutinen über eine Kabel- oder Funkverbindung übertragen werden.

Mittels der Vorrichtung 10 kann an einer Vielzahl unterschiedlicher Stellen 16, 16', 16" die lokale Brechkraft eines linken Brillenglases 18 und eines rechten Brillenglases 20 in einer Brillenfassung 22 vermessen werden, die auf den Kopf 24 eines Brillenträgers aufgesetzt ist. Die Vorrichtung 10 ermöglicht damit das Vermessen der Brechkraftverteilung des linken und des rechten Brillenglases 18, 20. Zu bemerken ist, dass die Vorrichtung 10 alternativ zu einem Smartphone insbesondere auch als ein Tabletcomputer mit einer Bilderfassungseinrichtung oder als eine digitale Kamera mit einer Rechnereinheit ausgebildet sein kann.

Um die lokale Brechkraft des linken Brillenglases 18 in der Brillenfassung 22 zu vermessen, wird der Kopf 24 des Brillenträgers in einem ersten Schritt mittels der Bilderfassungseirichtung 12 der Vorrichtung 10 aus unterschiedlichen Aufnahmepositionen 26, 26', 26" heraus erfasst, um damit unterschiedliche erste Abbildungen 39, 39', 39" mit einem Bild des vorderen Augenabschnitts 28 des linken Auges 30 mit einer mehrere Strukturpunkte 32 aufweisenden ausgedehnten Struktur 33 darin zu erhalten, wobei das linke Auge 30 des Brillenträgers jeweils eine zu der Aufnahmeposition 26, 26', 26" der Bilderfassungseinrichtung weisende Blickrichtung 34, 34', 34" hat, die dabei möglichst eine Eintrittsblende in der Bilderfassungseinrichtung 12 durchsetzt. Entsprechend wird für das Vermessen der lokalen Brechkraft des rechten Brillenglases 20 in der Brillenfassung 22 der Kopf 24 des Brillenträgers mittels der Bilderfassungseinrichtung 12 der Vorrichtung 10 aus unterschiedlichen Aufnahmepositionen 26, 26', 26" heraus erfasst, um auch damit unterschiedliche erste Abbildungen 39, 39', 39" mit einem Bild des vorderen Augenabschnitts 28 des rechten Auges 36 mit einer mehrere Strukturpunkte 32 aufweisenden Struktur 33 darin zu erhalten, wobei das rechte Auge 36 des Brillenträgers jeweils eine zu der Aufnahmeposition 26, 26', 26" der Bilderfassungseinrichtung 12 weisende Blickrichtung 38, 38', 38" hat, die möglichst die Eintrittsblende in der Bilderfassungseinrichtung 12 durchsetzt.

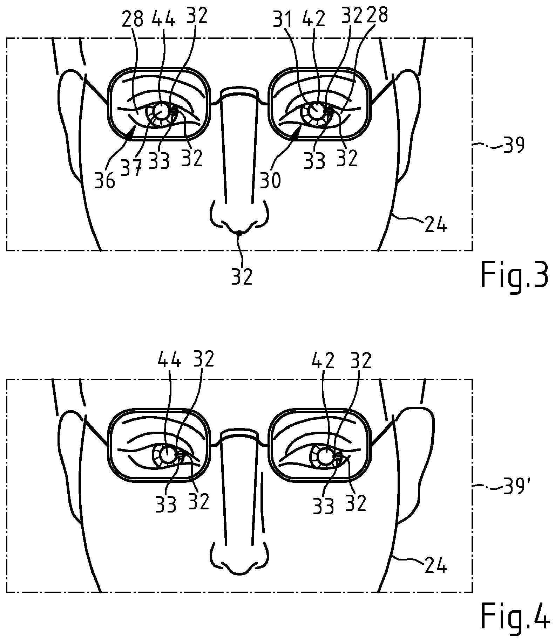

Die Fig. 2 zeigt die mittels der Bilderfassungseinrichtung 12 in der Vorrichtung 10 aus der Aufnahmeposition 26 erfasste erste Abbildung 39 eines Abschnitts des Kopfs 24 des Brillenträgers mit der Brillenfassung 22 und mit einem Bild eines vorderen Augenabschnitts 28 des linken Auges 30 mit den Strukturpunkten 32 der Struktur 33, der Iris, darin und mit einem Bild eines vorderen Augenabschnitts 28 des rechten Auges 36 mit einer Struktur 33, der Pupille, mit mehreren Strukturpunkt 32. In der Fig. 3 ist die mittels der Bilderfassungseinrichtung 12 in der Vorrichtung 10 aus der Aufnahmeposition 26' erfasste erste Abbildung 39' des Abschnitts des Kopfs 24 des Brillenträgers mit der Brillenfassung 22 und mit einem Bild des vorderen Augenabschnitts 28 des linken Auges 30 mit der Struktur 33 mit Strukturpunkten 32 darin und mit einem Bild eines vorderen Augenabschnitts 28 des rechten Auges 36 mit den Strukturpunkten 32 und der Struktur 33 zu sehen. Die Fig. 4 zeigt die mittels der Bilderfassungseinrichtung 12 in der Vorrichtung 10 aus der Aufnahmeposition 26" erfasste erste Abbildung 39" des Abschnitts des Kopfs 24 des Brillenträgers mit der Brillenfassung 22 und mit einem Bild des vorderen Augenabschnitts 28 des linken Auges 30 mit der Struktur 33 mit Strukturpunkten 32 darin und mit einem Bild eines vorderen Augenabschnitts 28 des rechten Auges 36 mit der Struktur 33 und den Strukturpunkten 32.

Wie in der Fig. 2, Fig.3 und Fig. 4 zu sehen ist, enthalten die dort gezeigten ersten Abbildungen 39, 39', 39" nicht nur jeweils ein Bild des vorderen Augenabschnitts 28 des linken Auges 30 mit wenigstens einem Strukturpunkt 32 darin und ein Bild des rechten Auges 36 mit einem Strukturpunkt 32 darin bei einer Blickrichtung, welche die Eintrittsblende der Bilderfassungseinrichtung 12 in den in der Fig. 1 gezeigten unterschiedlichen Aufnahmepositionen 26, 26' und 26" durchsetzt, sondern auch Bilder eines jeweils gleichen Abschnitts 23 der Brillenfassung 22 und ein Bild der Pupille 42 des linken Auges 30 und ein Bild der Pupille 44 des rechten Auges 36.

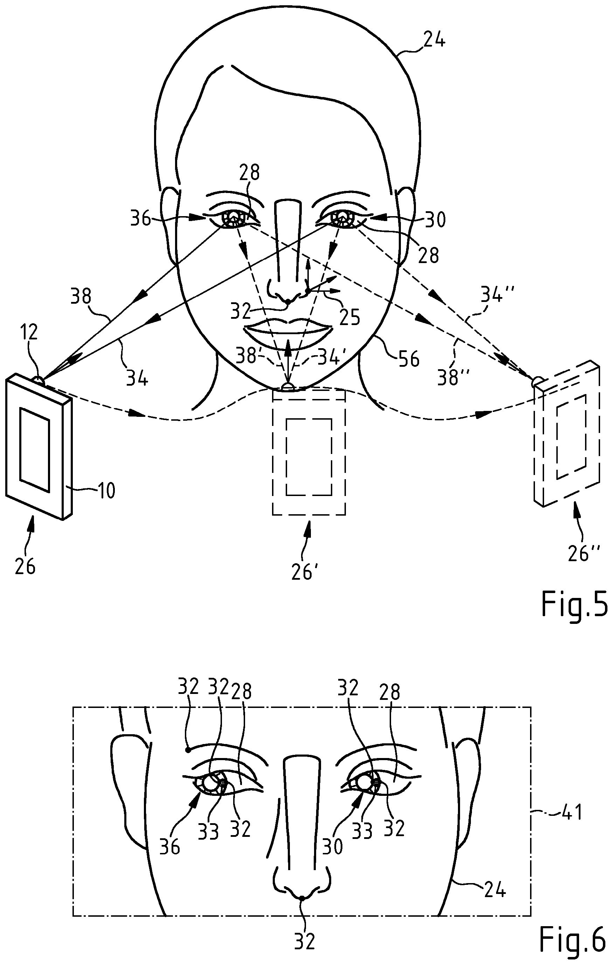

In einem zweiten Schritt, der zeitlich vor oder nach dem ersten Schritt liegen kann, wird der Kopf 24 des Brillenträgers, wie in der Fig. 5 zu sehen, ohne die Brillenfassung 22 mittels der Bilderfassungseirichtung 12 der Vorrichtung 10 aus weiteren unterschiedlichen Aufnahmepositionen 26, 26', 26" heraus erfasst, die von den Aufnahmepositionen für das Aufnehmen des Kopfs des Brillenträgers mit der Brillenfassung verschieden sein können, um damit unterschiedliche zweite Abbildungen 41, 41', 41" mit einem Bild des vorderen Augenabschnitts 28 des linken Auges 30 mit der Struktur 33 und den Strukturpunkten 32 darin zu erhalten. Die Blickrichtung 34 des linken Auges 30 des Brillenträgers ist dabei wiederum auf eine Eintrittsblende der Bilderfassungseinrichtung 12 der Vorrichtung 10 gerichtet.

Entsprechend wird für das Vermessen der lokalen Brechkraft des rechten Brillenglases 20 in der Brillenfassung 22 der Kopf 24 des Brillenträgers mittels der Bilderfassungseirichtung 12 der Vorrichtung 10 aus unterschiedlichen Aufnahmepositionen 26, 26', 26" heraus erfasst, um auch damit unterschiedliche zweite Abbildungen 41, 41', 41" mit einem Bild des vorderen Augenabschnitts 28 des rechten Auges 36 mit der Struktur 33 und den Strukturpunkten 32 darin zu erhalten. Die Blickrichtung 38 des rechten Auges 36 des Brillenträgers ist dabei wiederum auf eine Eintrittsblende der Bilderfassungseinrichtung 12 der Vorrichtung 10 gerichtet.

Die Fig. 6 zeigt die mittels der Bilderfassungseinrichtung 12 in der Vorrichtung 10 aus der Aufnahmeposition 26 erfasste zweite Abbildung 41 eines Abschnitts des Kopfs 24 des Brillenträgers ohne Brillenfassung 22 und mit einem Bild eines vorderen Augenabschnitts 28 des linken Auges 30 mit der Struktur 33 und den Strukturpunkten 32 und mit einem Bild eines vorderen Augenabschnitts 28 des rechten Auges 36 mit der Struktur 33 und den Strukturpunkten 32.

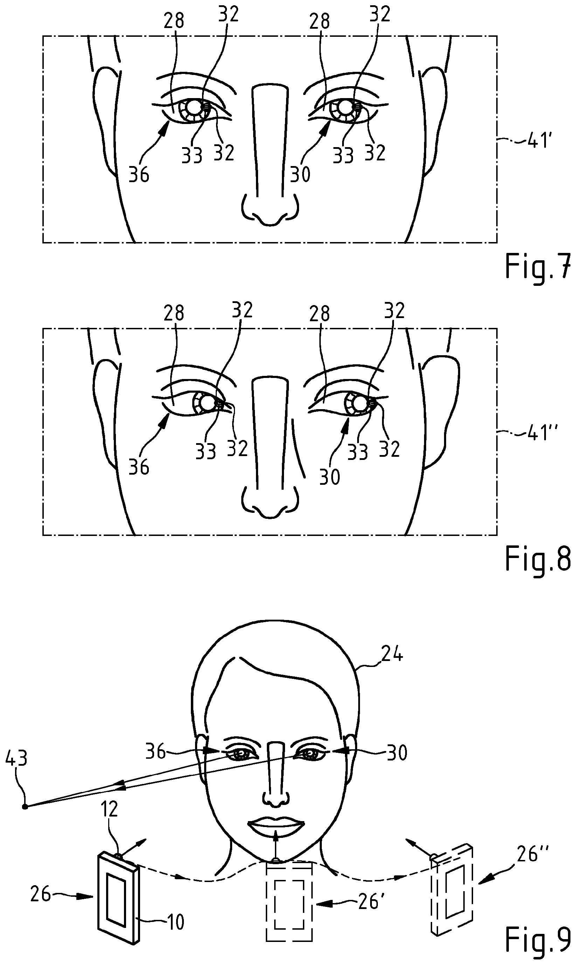

In der Fig. 7 ist die mittels der Bilderfassungseinrichtung 12 in der Vorrichtung 10 aus der Aufnahmeposition 26' erfasste zweite Abbildung 41' des Abschnitts des Kopfs 24 des Brillenträgers ohne Brillenfassung 22 und mit einem Bild des vorderen Augenabschnitts 28 des linken Auges 30 mit der Struktur 33 und den Strukturpunkten 32 darin und mit einem Bild eines vorderen Augenabschnitts 28 des rechten Auges 36 mit der Struktur 33 und den Strukturpunkten 32 dargestellt.

Die Fig. 8 zeigt die mittels der Bilderfassungseinrichtung 12 in der Vorrichtung 10 aus der Aufnahmeposition 26" erfasste zweite Abbildung 41" des Abschnitts des Kopfs 24 des Brillenträgers ohne Brillenfassung 22 und mit einem Bild des vorderen Augenabschnitts 28 des linken Auges 30 mit der Struktur 33 und den Strukturpunkten 32 und mit einem Bild eines vorderen Augenabschnitts 28 des rechten Auges 36 mit der Struktur 33 und den Strukturpunkten 32.

Alternativ dazu, dass mittels der Bilderfassungseinrichtung 12 unterschiedliche zweite Abbildungen 41, 41', 41" des Kopfs 24 des Brillenträgers ohne die Brillenfassung 22 mit einem Bild des vorderen Augenabschnitts 28 des linken Auges 30 und/oder des rechten Auges 36 mit wenigstens einem Strukturpunkt 32 erfasst werden, während der Brillenträger seinen Blick auf eine Eintrittsblende der Bilderfassungseinrichtung 12 richtet, ist es wie in der Fig. 9 gezeigt auch möglich, zweite Abbildungen 41, 41', 41" des Kopfs 24 des Brillenträgers ohne die Brillenfassung 22 mit einem Bild des vorderen Augenabschnitts 28 des linken Auges 30 und/oder des rechten Auges 36 mit wenigstens einem Strukturpunkt 32 zu erfassen, während der Brillenträger, wie in der Fig. 9 gezeigt, auf einen ortsfesten Punkt 43 im Raum oder alternativ auf einen Punkt im Unendlichen blickt.

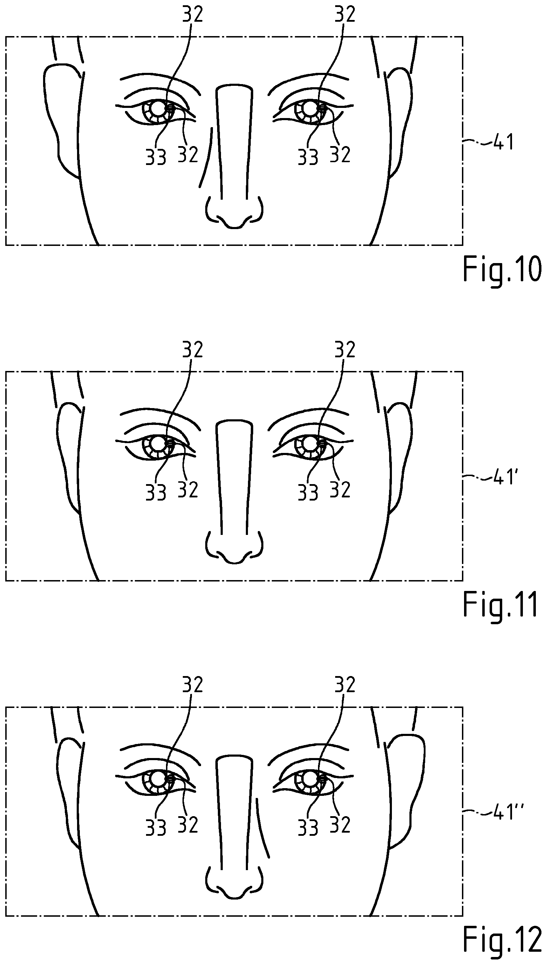

Die Fig. 10 zeigt eine mittels der Bilderfassungseinrichtung 12 in der Vorrichtung 10 aus der in der Fig. 9 kenntlich gemachten Aufnahmeposition 26 erfasste zweite Abbildung 41 eines Abschnitts des Kopfs 24 des Brillenträgers ohne Brillenfassung 22. In der Fig. 11 ist eine mittels der Bilderfassungseinrichtung 12 in der Vorrichtung 10 aus der in der Fig. 9 kenntlich gemachten Aufnahmeposition 26' erfasste zweite Abbildung 41' eines Abschnitts des Kopfs 24 des Brillenträgers ohne Brillenfassung 22 zu sehen. Die Fig. 12 zeigt eine mittels der Bilderfassungseinrichtung 12 in der Vorrichtung 10 aus der in der Fig. 9 kenntlich gemachten Aufnahmeposition 26" erfasste zweite Abbildung 41" eines Abschnitts des Kopfs 24 des Brillenträgers ohne Brillenfassung 22.

Die in der Fig. 6, Fig. 7 und Fig. 8 sowie in der Fig. 10, Fig. 11 und Fig. 12 gezeigten zweiten Abbildungen 41, 41', 41" enthalten nicht nur jeweils ein Bild des vorderen Augenabschnitts 28 des linken Auges 30 mit der Struktur 33 und den Strukturpunkten 32 und ein Bild vorderen Augenabschnitts 28 des rechten Auges 36 mit der Struktur 33 und den Strukturpunkten 32 zu den in der Fig. 5 bzw. der Fig. 9 gezeigten unterschiedlichen Aufnahmepositionen 26, 26', 26" der Bilderfassungseinrichtung 12, sondern neben einem Bild der Pupille 42 des linken Auges 30 und einem Bild der Pupille 44 des rechten Auges 36 auch einen Strukturpunkt 32 des Kopfs 24 des Brillenträgers in Form eines Punkts auf der Nasenspitze, dessen Lage in einem zu dem Kopf 24 des Brillenträgers ortsfesten Koordinatensystem 25 - anders als die im Allgemeinen von der jeweiligen Blickrichtung abhängige Lage der Strukturpunkte 32 in dem vorderen Augenabschnitt 28 des linken und rechten Auges 30, 36 - grundsätzlich von der Blickrichtung 34, 34', 34" des linken Auges 30 und von der Blickrichtung 38, 38', 38" des rechten Auges 36 unabhängig ist. Ein Punkt, dessen Lage in einem zu dem Kopf 24 des Brillenträgers ortsfesten Koordinatensystem 25 von der Blickrichtung 34, 34', 34", 38, 38', 38" des linken und rechten Auges 30, 36 im Allgemeinen unabhängig ist, kann allerdings z. B. auch ein Punkt eines Naseflügels der Nase oder ein Punkt einer Augenbraue sein.

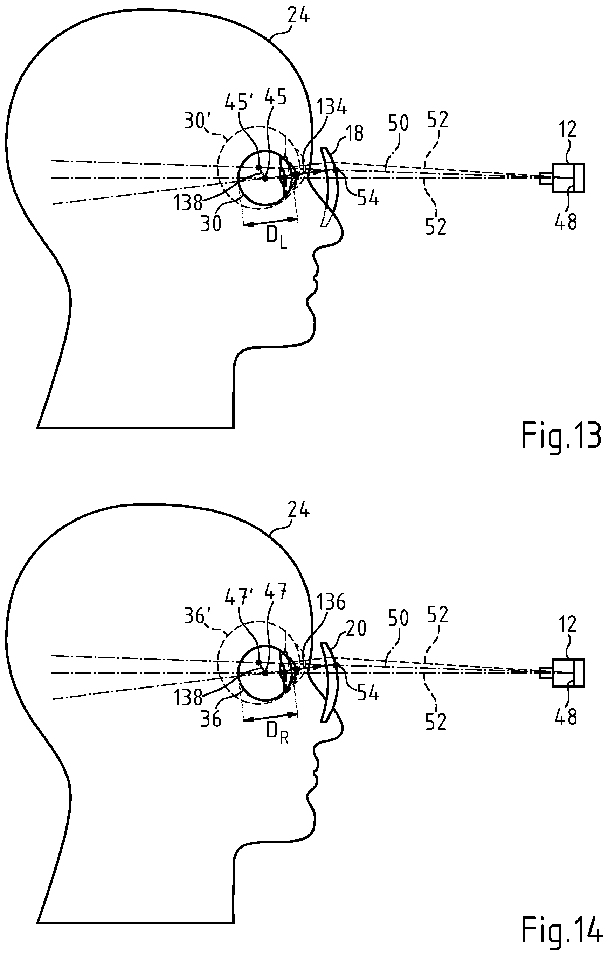

Die Fig. 13 zeigt den Kopf 24 des Brillenträgers mit dem linken Auge 30 und dessen Augenrotationspunkt 45 sowie dem linken Brillenglas 18 und der Bilderfassungseinrichtung 12. In der Fig. 14 ist der Kopf 24 des Brillenträgers mit dem rechten Auge 36 und dessen Augenrotationspunkt 47 sowie dem rechten Brillenglas 20 und der Bilderfassungseinrichtung 12 zu sehen. Mittels der Bilderfassungseinrichtung 12 wird durch das linke und rechte Brillenglas 18, 20 das linke und rechte Auge 30, 36 als das Bild eines scheinbaren linken bzw. rechten Auges 30', 36' erfasst, das abhängig von den dioptrischen Eigenschaften des linken bzw. rechten Brillenglases 18, 20 größer oder kleiner als das linke bzw. rechte Auge 30, 36 ist und das von diesem abliegt.

In der Rechnereinheit 14 der Vorrichtung 10 werden aus ersten Abbildungen 39, 39', 39", wie sie in der Fig. 2 bis Fig. 4 gezeigt sind und die identische Abschnitte der Brillenfassung 22 enthalten, mittels Bildauswertung Brillenfassungsinformationsdaten berechnet, die Informationen aus der Gruppe Position, Lage, Form und Koordinaten der Brillenfassung 22 in einem zu der Brillenfassung ortsfesten Koordinatensystem 25' umfassen.

Aus den zweiten Abbildungen 41, 41',41", wie sie in der Fig. 6, Fig. 7 und Fig. 8 sowie Fig. 10, Fig. 11 und Fig. 12 zu sehen sind, werden in der Rechnereinheit 14 der Vorrichtung 10 mittels Bildauswertung die Koordinaten der Strukturpunkte 32 des vorderen Augenabschnitts 28 des linken Auges 30 und die Koordinaten der Strukturpunkte 32 des vorderen Augenabschnitts 28 des rechten Auges 36 berechnet. Anhand der Abstände der Strukturpunkte 32 kann dann die Größe von Strukturen, z. B. der Iris, im vorderen Augenabschnitt 28 des linken bzw. rechten Auges 30, 36 bestimmt werden. Aus den Verhältnissen der Größen der durch das Brillenglas in den ersten Abbildungen beobachteten Strukturen zu den realen Größen der Strukturen berechnet aus den zweiten Abbildungen kann auf die lokale Brechkraft geschlossen werden.

Darüber hinaus werden in der Rechnereinheit 14 die Koordinaten des Augenrotationspunkts 45 des linken Auges 30 und des Augenrotationspunkts 47 des rechten Auges 36 aus einem für das linke Auge 30 angenommenen Augendurchmesser $D_L$ und aus einem für das rechte Auge 36 angenommenen Augendurchmesser $D_R$ sowie aus den Koordinaten zu Strukturpunkten 32 des Kopfes 24 berechnet, wobei deren Koordinaten aus wenigstens zwei Abbildungen aus einer Gruppe wenigstens zweier erster Abbildungen 39, 39', 39", 39''', wie sie in der Fig. 2 bis Fig. 4 gezeigt sind, und wenigstens zweier zweiter Abbildungen 41, 41', 41", wie sie in den Fig. 6 bis Fig. 8 und Fig. 10 bis Fig. 12 gezeigt sind, bestimmt werden.

Der Augenrotationspunkt 45 des linken Auges 30 und der Augenrotationspunkt 47 des rechten Auges 36 wird hierfür aus bekannten Informationen zur Lage des linken und rechten Auges 30, 36 in dem Kopf 24 des Brillenträgers anhand von Koordinaten zu Strukturpunkten 32 des Kopfes 24, z. B. der Nasenspitze, sowie einem angenommenen, z. B. standardisierten Wert für den Augendurchmesser $D_L$ des linken Auges 30 und einem angenommenen Wert für den Augendurchmesser $D_R$ des rechten Auges 36 bestimmt. Der Augendurchmesser $D_L$, $D_R$ des linken und rechten Auges 30, 36 einer Person ist grundsätzlich abhängig von deren Geschlecht und deren Alter. Es zeigt sich, dass die Annahme eines Augendurchmessers $D_{L,R}$ mit 22 mm $\leq D_{L,R} \leq$ 23 mm eine gute Abschätzung für die tatsächliche Größe eines Augendurchmessers ist.

Die Koordinaten von Strukturpunkten 32 des vorderen Augenabschnitts 28 des linken Auges 30 und des rechten Auges 36 werden in der Rechnereinheit 14 der Vorrichtung 10 aus den erfassten zweiten Abbildungen 41, 41', 41" des Kopfes 24 des Brillenträgers ohne die Brillenfassung 22, wie sie in den Fig. 6 bis Fig. 8 und Fig. 10 bis Fig. 12 gezeigt sind, berechnet, indem das Bild ein und desselben Strukturpunkts 32 in unterschiedlichen Abbildungen 41,41', 41" mittels eines Feature-Matching-Verfahrens detektiert und dann anhand bekannter intrinsischer und extrinsischer Parameter der Bilderfassungseinrichtung 12 trianguliert wird. Diese intrinsischen und extrinsischen Parameter der Bilderfassungseinrichtung 12 sind in einem Datenspeicher der Rechnereinheit 14 abgelegt. Sie können z. B. mittels eines Kamerakalibrierungsverfahrens oder auch mittels eines SLAM-Verfahrens bestimmt werden. Zu bemerken ist, dass für diese Triangulation insbesondere sogenannte Tiefenschätzungs-Verfahren und 3D-Rekonstruktionsverfahren zum Einsatz kommen können.

In der Rechnereinheit 14 werden dann zu einer in der Fig. 2 bis Fig. 4 gezeigten ersten Abbildung 39, 39', 39" der Durchblickpunkt 54 durch das linke Brillenglas 18 bestimmt.

Hierfür wird zu der entsprechenden ersten Abbildung 39, 39', 39" mittels Bildauswertung zunächst das Pupillenzentrum 31 der Pupille 42 des linken Auges 30 in dieser Abbildung bestimmt. Dies kann z. B. in einem Algorithmus anhand einer Segmentierung des vorderen Augenabschnitts 28 des linken Auges 30 erfolgen, bei dem dunkle Ellipsen innerhalb dieses vorderen Augenabschnitts 28 detektiert werden, deren geometrischer Schwerpunkt als das gesuchte Pupillenzentrum 31 angenommen wird. Zu bemerken ist, dass dieses Bestimmen des Pupillenzentrums nicht zwingend in einer Rechnereinheit erfolgen muss sondern grundsätzlich auch manuell durch eine Person erfolgen kann, die das Verfahren zum Vermessen der lokalen Brechkraft oder der Brechkraftverteilung eines linken und/oder eines rechten Brillenglases anwendet.

Anhand der Kenntnis der intrinsischen und extrinsischen Parameter der Bilderfassungseinrichtung 12 beim Erfassen einer Abbildung 39, 39', 39" kann so zu dem in der Fig. 3 gezeigten angenommenen Pupillenzentrum 31 der Pupille 42 des linken Auges 30 in der Bildebene 48 der Bilderfassungseinrichtung 12 der zugehörige Hauptstrahl 50 des Abbildungsstrahlengangs 52 bestimmt werden, mit dem das Pupillenzentrum 31 der Pupille 42 des linken Auges 30 durch das linke Brillenglas 18 in die Bildebene 48 der Bilderfassungseirichtung 12 abgebildet wird. Dieser Hauptstrahl 50 wird durch das linke Brillenglas 18 gebrochen. Der Durchblickpunkt 54, an dem der Hauptstrahl 50 das linke Brillenglas 18 auf der dem Brillenträger abgewandten Seite durchsetzt, kann dann unter Berücksichtigung der wie vorstehend beschrieben ermittelten Brillenfassungsinformationsdaten, d. h. unter Berücksichtigung der Koordinaten der Brillenfassung 22 auf dem Kopf 24 des Brillenträgers, als der Schnittpunkt des Hauptstrahls 50 mit dem linken Brillenglas 18, d. h. als der Durchblickpunkt (x,y) des linken Auges 30 durch das linke Brillenglas 18, berechnet werden. Daraus kann eine angenommene Blickrichtung 134 des linken Auges 30 des Brillenträgers bestimmt werden, die einem von dem Augenrotationspunkt 45 des linken Auges 30 in Richtung des Durchblickpunkts 54 am linken Brillenglas 18 zeigenden Vektors entspricht. Der Schnittpunkt dieses Vektors mit einer Kugel um das Augenrotationszentrum 45 des linken Auges 30, deren Durchmesser dem Augendurchmesser $D_L$ entspricht, ergibt dann das Pupillenzentrum 31 der Pupille 42 des linken Auges 30.

Für das Bestimmen des in der Fig. 14 gezeigten Durchblickpunkts 54 durch das rechte Brillenglas 20 wird zu der entsprechenden ersten Abbildung 39, 39', 39" mittels Bildauswertung zunächst das Pupillenzentrum 37 der Pupille 44 des rechten Auges 36 in dieser Abbildung bestimmt. Dies kann wiederum mittels des vorstehend angegebenen Algorithmus oder von Hand erfolgen. Anhand der Kenntnis der intrinsischen und extrinsischen Parameter der Bilderfassungseinrichtung 12 beim Erfassen einer Abbildung 39, 39', 39" kann dann auch hier zu dem in der Fig. 3 gezeigten angenommenen Pupillenzentrum 37 der Pupille 44 des rechten Auges 36 in der Bildebene 48 der Bilderfassungseinrichtung 12 der zugehörige Hauptstrahl 50 des Abbildungsstrahlengangs 52 bestimmt werden, mit dem das Pupillenzentrum 37 der Pupille 44 des rechten Auges 36 durch das rechte Brillenglas 20 in die Bildebene 48 der Bilderfassungseirichtung 12 abgebildet wird. Dieser Hauptstrahl 50 wird durch das rechte Brillenglas 20 gebrochen. Der Ort der Brechung dieses Hauptstrahls 50 an dem rechten Brillenglas 20 kann dann wiederum unter Berücksichtigung der wie vorstehend beschrieben ermittelten Brillenfassungsinformationsdaten, d. h. unter Berücksichtigung der Koordinaten der Brillenfassung 22 auf dem Kopf 24 des Brillenträgers, als der Schnittpunkt des Hauptstrahls 50 mit dem rechten Brillenglas 20, d. h. als der Durchblickpunkt (x,y) durch das rechte Brillenglas 20, berechnet werden.

Daraus kann eine angenommene Blickrichtung 136 des rechten Auges 36 des Brillenträgers bestimmt werden, die einem von dem Augenrotationspunkt 47 des rechten Auges 36 ausgehenden und in Richtung des Durchblickpunkts 54 am rechten Brillenglas 20 zeigenden Vektors entspricht. Der Schnittpunkt dieses Vektors mit einer Kugel um das Augenrotationszentrum 47 des rechten Auges 36, deren Durchmesser dem Augendurchmesser $D_R$ entspricht, ergibt dann das in der Fig.3 gezeigte Pupillenzentrum 37 der Pupille 44 des rechten Auges 36.

Aus den Strukturpunkten 32 der Strukturen des vorderen Augenabschnitts 28 des linken Auges 30 werden Größen der Strukturen darin anhand der aus den zweiten Abbildungen 41, 41', 41" zuvor berechneten Koordinaten dieser Strukturpunkte 32 und deren Abstände voneinander bestimmt, z. B. der Durchmesser der Iris. Außerdem wird die Größe der scheinbaren durch das linke Brillenglas 18, 20 beobachteten Strukturen 33 anhand einer ersten Abbildung 39, 39', 39" wie folgt bestimmt: zu jedem Strukturpunkt 32 in diesen Abbildungen wird mittels der intrinsischen und extrinsischen Parameter der Bilderfassungseinrichtung 12 der zugehörige Hauptstrahl 50 berechnet sowie dessen Schnittpunkt mit dem linken Brillenglas 18 bestimmt. Aus diesen Schnittpunkten und deren Abständen zueinander können dann die scheinbaren Größen der Struktur 33 bei Beobachtung durch das linke Brillenglas 18 bestimmt werden. Aus dem Verhältnis der realen zu den scheinbaren Größen kann dann die lokale Brechkraft am Durchblickpunkt 54 des linken Brillenglases 18 angegeben werden.

Aus den Strukturpunkten 32 der Strukturen des vorderen Augenabschnitts 28 des rechten Auges 36 werden Größen der Strukturen 33 darin anhand der aus den zweiten Abbildungen 41, 41', 41" zuvor berechneten Koordinaten dieser Strukturpunkte 32 und deren Abstände voneinander bestimmt, z. B. der Durchmesser der Iris. Außerdem wird die Größe der scheinbaren durch das rechte Brillenglas 20 beobachteten Strukturen 33 anhand einer ersten Abbildung 39, 39', 39" wie folgt bestimmt: zu jedem Strukturpunkt 32 in diesen Abbildungen wird mittels der intrinsischen und extrinsischen Parameter der Bilderfassungseinrichtung 12 der zugehörige Hauptstrahl 50 berechnet sowie dessen Schnittpunkt mit dem rechten Brillenglas 20 bestimmt. Aus diesen Schnittpunkten und deren Abständen zueinander können dann die scheinbaren Größen der Struktur 33 bei Beobachtung durch das rechte Brillenglas 20 bestimmt werden. Aus dem Verhältnis von Größen der Strukturen 33, wenn diese mittels der Bilderfassungseinrichtung 12 ohne ein zwischen der Bilderfassungseinrichtung 12 und dem linken bzw. rechten Auge 30, 36 angeordnetes Brillenglas 18, 20 erfasst werden, zu den Größen der Strukturen, die diese in den mittels der Bilderfassungseinrichtung 12 durch das linke bzw. rechte Brillenglas erfassten Abbildungen haben, ergibt sich durch Auswerten der Abbildungsgleichungen die Brechkraft des linken bzw. rechten Brillenglases 18, 20 an den von der angenommenen Blickrichtung 134, 136 durchsetzten Stellen.

Aus der berechneten Lage (x, y) der Durchblickpunkte 54 durch das linke und rechte Brillenglas 18, 20 für die angenommene Blickrichtung 134 des linken Auges 30 und für die angenommene Blickrichtung 136 des rechten Auges 36 und den wie vorstehend beschrieben berechneten Koordinaten des Augenrotationspunkts 45, 47 für das rechte bzw. linke Auge 30, 36 wird dann in der Rechnereinheit 14 der Vorrichtung 10 anhand eines anhand der Abbildungsgleichungen für den Augenrotationspunkt 45', 47' des mittels der Bilderfassungseinrichtung durch das linke bzw. rechte Brillenglas 18, 20 ermittelten dreidimensionalen Versatzes 138 der Augenrotationspunkte 45, 47' des scheinbaren linken bzw. rechten Auges 30, 36' zu dem Augenrotationspunkt 45, 47 des linken bzw. rechten Auges 30, 36 die prismatische Wirkung des linken bzw. rechten Brillenglases 18, 20 bestimmt.

Zu bemerken ist, dass in dem Schritt des Bestimmens einer lokalen dioptrischen Wirkung des linken Brillenglases an dem Durchblickpunkt die lokale prismatische Wirkung grundsätzlich auch anhand eines Versatzes des vorderen Augenabschnittes in dem Bild des linken Auges ermittelt werden kann.

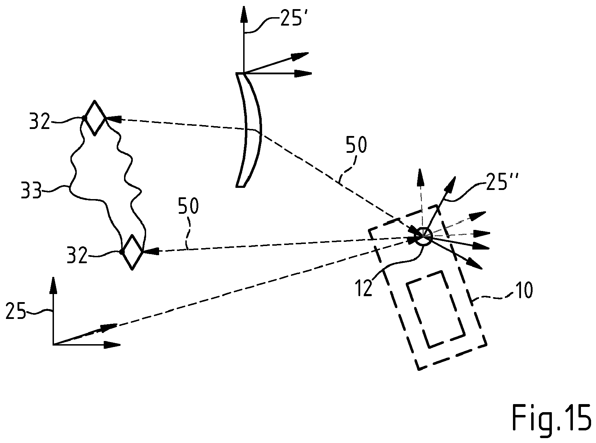

Die Fig. 15 erläutert das Berechnen von Abbildungsstrahlengängen für Strukturpunkte 32 einer Struktur 33, deren Bilder in mittels der Bilderfassungseinrichtung 12 erfassten Abbildungen liegen.

Aus einer Pixelkoordinate in homogenen Koordinaten

$$C = \begin{pmatrix} C_x \\ C_y \\ 1 \end{pmatrix}$$

eines in der Bilderfassungseinrichtung 12 abgebildeten Strukturpunkts 32 eines Augenabschnitts 28 des linken Auges 30 bzw. des rechten Auges 36 wird anhand des bekannten Kamerakalibrierungsoperators $\overline{K}$ wie oben beschrieben der Hauptstrahl 50 des in die Bildebene der Bilderfassungseinrichtung 12 abbildenden Abbildungsstrahlengangs 52 für den einen Strukturpunkt 32 in Form eines dreidimensionalen Vektors in einem Koordinatensystem 25" der Bilderfassungseinrichtung

$$\vec{r}_0 = \overline{K}^{-1} \cdot C$$

bestimmt. Aus den extrinsischen Parametern der Bilderfassungseinrichtung 12 zu einer in Bezug auf die Brillenfassung 22 und den Kopf 24 des Brillenträgers bekannten Aufnahmeposition 26, d. h. der räumlichen Lage und Orientierung der Bilderfassungseinrichtung 12 mit dem Koordinatensystem 25" in einem zu dem Koordinatensystem 25' der Brillenfassung 22 und in einem Koordinatensystem 25, das zu dem Kopf 24 des Brillenträgers ortsfest ist, wird $\vec{r}_0$ dann durch die Lineartransformation

$$\vec{r}_{Szene} = \overline{R}^T \cdot (\vec{r}_0 - \overline{T})$$

aus dem Koordinatensystem 25" der Bilderfassungseinrichtung 12 durch eine dem inversen Rotationsoperator $\overline{R}^T$ entsprechende Drehung und eine dem inversen Translationsoperator $-\overline{T}$ entsprechende Translation in das Koordinatensystem 25' der Brillenfassung 22 bzw. das zu dem Kopf 24 des Brillenträgers ortsfeste Koordinatensystem 25 überführt.

Aus einem jeden abgebildeten Strukturpunkt 32 wird dann ein Hauptstrahl 50 des Abbildungsstrahlengangs 52, der ein Brillenglas 18, 20 der Brille mit bekannter Position und Lage in dem Koordinatensystem 25" der Bilderfassungseinrichtung 12 durchsetzt, entsprechend der Aufnahmeposition 26 der Bilderfassungseinrichtung 12 berechnet. Hieraus und aus den zuvor bestimmten Koordinaten der unterschiedlichen Strukturpunkte 32 des Augenabschnitts 28 des linken Auges 30 bzw. des rechten Auges 36 ergibt sich dann ein Strahlenmodell, das für einen jeden Strukturpunkt 32 den zugehörigen an dem Durchblickpunkt 54 von dem linken bzw. rechten Brillenglas 18, 20 abgelenkten Abbildungsstrahlengang 52 enthält Daraus kann die prismatische Wirkung des entsprechenden linken oder rechten Brillenglases 18, 20 berechnet werden.

Indem die lokale Brechkraft k(x,y) des linken und rechten Brillenglases 18, 20 für viele unterschiedliche Blickrichtungen des Brillenträgers, d. h. eine Vielzahl unterschiedlicher Durchblickpunkte 54 durch das linke und rechte Brillenglas 18, 20 bestimmt wird, kann die Rechnereinheit 14 dann eine Verteilung der Brechkraft k(x,y) über das Brillenglas 18, 20 ermitteln.

Zu bemerken ist, dass die Genauigkeit der Berechnung der lokalen Brechkraft k(x,y) des linken und rechten Brillenglases 18, 20 insbesondere dadurch gesteigert werden kann, dass eine Vielzahl unterschiedliche Strukturpunkte 32 in dem vorderen Augenabschnitt 28 des linken und rechten Auges 30, 36 eines Brillenträgers in einer Vielzahl von ersten und zweiten Abbildungen des Kopfs 24 des Brillenträgers erfasst und ausgewertet werden.

Zusammenfassend sind insbesondere folgende bevorzugte Merkmale der Erfindung festzuhalten: Die Erfindung betrifft ein Verfahren zum Vermessen der lokalen Brechkraft oder der Brechkraftverteilung eines linken und/oder eines rechten Brillenglases 18, 20, vorzugsweise in einer Brillenfassung 22, in Trageposition auf dem Kopf 24 eines Brillenträgers. Die Erfindung betrifft auch ein Computerprogrammprodukt mit einem Computerprogramm mit Programmcode sowie eine Vorrichtung zur Durchführung des Verfahrens.

Das Verfahren zum Vermessen der lokalen Brechkraft eines linken und/oder eines rechten Brillenglases 18, 20 in einer Brillenfassung 22 in Trageposition auf einem Kopf 24 eines Brillenträgers weist auf: einen Schritt des Erfassens von wenigstens zwei ersten Abbildungen aus relativ zu dem Kopf 24 unterschiedlichen Aufnahmepositionen 26, 26', 26" heraus, wobei die wenigstens zwei ersten Abbildungen 39, 39', 39" jeweils enthalten:

ein Bild eines vorderen Augenabschnitts 28 eines linken Auges 30 mit wenigstens zwei voneinander beabstandeten Strukturpunkten 32 darin, wobei das linke Auge 30 jeweils eine zu der Aufnahmeposition 26, 26', 26" weisende Blickrichtung 34, 34', 34" hat und wobei ein die wenigstens zwei Strukturpunkte 32 abbildender Abbildungsstrahlengang 52 das linke Brillenglas 18 durchsetzt, und/oder ein Bild eines vorderen Augenabschnitts 28 eines rechten Auges 36 mit wenigstens zwei voneinander beabstandeten Strukturpunkten 32 darin, wobei das rechte Auge 36 jeweils eine zu der Aufnahmeposition 26, 26', 26" weisende Blickrichtung 38, 38', 38" hat und wobei ein die wenigstens zwei Strukturpunkte 32 abbildender Abbildungsstrahlengang 52 das rechte Brillenglas 20 durchsetzt,

einen Schritt des Erfassens von wenigstens zwei zweiten Abbildungen 41, 41', 41" aus relativ zu dem Kopf 24 unterschiedlichen Aufnahmepositionen 26, 26', 26" heraus, wobei die wenigstens zwei zweiten Abbildungen 41, 41', 41" jeweils enthalten:

ein Bild der wenigstens zwei voneinander beabstandeten Strukturpunkte 32 des vorderen Augenabschnitts 28 des linken Auges 30 ohne das linke Brillenglas 18 der Brillenfassung 22 oder ohne die Brillenfassung 22, enthaltend das linke Brillenglas 18, oder mit dem linken Brillenglas 18, wobei der dem Bild der wenigstens zwei Strukturpunkte 32 des vorderen Augenabschnitts 28 des linken Auges 30 zugrundeliegende Abbildungsstrahlengang 52 bei dem Erfassen weder das linke noch das rechte Brillenglas 18,20 in der Brillenfassung durchsetzt, und/oder ein Bild der wenigstens zwei Strukturpunkte 32 des vorderen Augenabschnitts 28 des rechten Auges 36 ohne das rechte Brillenglas 20 der Brillenfassung 22 oder ohne die Brillenfassung 22, enthaltend das rechte Brillenglas 20, oder mit dem rechten Brillenglas 20, wobei der dem Bild der wenigstens zwei Strukturpunkte 32 des vorderen Augenabschnitts 28 des rechten Auges 36 zugrundeliegende Abbildungsstrahlengang 52 bei dem Erfassen weder das linke noch das rechte Brillenglas 18, 20 in der Brillenfassung 22 durchsetzt;

einen Schritt des Berechnens von Brillenfassungsinformationsdaten mit Informationen aus der Gruppe Position, Lage, Form und Koordinaten der Brillenfassung 22 aus wenigstens zwei einen identischen Abschnitt der Brillenfassung 22 enthaltenden Abbildungen aus der Gruppe der wenigstens zwei ersten Abbildungen 39, 39', 39" und der wenigstens zwei zweiten Abbildungen 41, 41', 41" in einem Koordinatensystem 25" das zu einem zu dem Kopf 24 des Brillenträgers ortsfesten Koordinatensystem 25 referenziert ist, mittels Bildauswertung;

einen Schritt des Berechnens der Koordinaten der wenigstens zwei Strukturpunkte 32 des vorderen Augenabschnitts 28 des linken Auges 30 und/oder der wenigstens zwei Strukturpunkte 32, 32' des vorderen Augenabschnitts 28 des rechten Auges 36 aus den wenigstens zwei zweiten Abbildungen 41, 41', 41" in einem Koordinatensystem 25", das zu einem zu dem Kopf 24 des Brillenträgers ortsfesten Koordinatensystem 25 referenziert ist, mittels Bildauswertung;

einen Schritt des Bestimmens des Durchblickpunktes (x,y) durch das linke Brillenglas 18 aus wenigstens einer ersten Abbildung jeweils aus einem aus dem Bild eines vorderen Augenabschnitts 28 des linken Auges 30 mittels Bildauswertung oder durch Markierung von Hand bestimmten Zentrum einer Bildstruktur aus der Gruppe Pupillenbild, Irisbild und den Brillenfassungsinformationsdaten und/oder des Bestimmens des Durchblickpunktes (x,y) durch das rechte Brillenglas 20 aus wenigstens einer ersten Abbildung jeweils aus einem aus dem Bild eines vorderen Augenabschnitts 28 des rechten Auges 36 mittels Bildauswertung oder durch Markierung von Hand bestimmten Zentrum einer Bildstruktur 33 aus der Gruppe Pupillenbild, Irisbild und den Brillenfassungsinformationsdaten; und

einen Schritt des Bestimmens einer lokalen dioptrische Wirkung des linken Brillengases 18 an dem Durchblickpunkt 54, bei dem aus den aus den wenigstens zwei zweiten Abbildungen 41, 41', 41" berechneten Koordinaten der wenigstens zwei Strukturpunkte 32 des vorderen Augenabschnitts 28 des linken Auges 30 und aus einem Bild dieser wenigstens zwei Strukturpunkte 32 in einer Abbildung aus der Gruppe der wenigstens zwei ersten Abbildungen 39, 39', 39" die lokale Brechkraft $k(x,y)$ des linken Brillenglases 18 an dem Durchblickpunkt 54 bestimmt wird; und/oder einer lokalen dioptrische Wirkung des rechten Brillengases 20 an dem Durchblickpunkt 54, bei dem aus den aus den wenigstens zwei zweiten Abbildungen 41, 41', 41" berechneten Koordinaten der wenigstens zwei Strukturpunkte 32 des vorderen Augenabschnitts 28 des rechten Auges 36 und aus einem Bild dieser wenigstens zwei Strukturpunkte 32 in einer Abbildung aus der Gruppe der wenigstens zwei ersten Abbildungen 39, 39', 39" die lokale Brechkraft $k(x,y)$ des rechten Brillenglases 20 an dem Durchblickpunkt 54 bestimmt wird.

## Bezugszeichenliste

| 10 | Vorrichtung |
| 12 | Bilderfassungseinrichtung |
| 14 | Rechnereinheit |
| 15 | Koordinatensystem der Bilderfassungseinrichtung |
| 16, 16', 16" | Stelle |
| 18 | linkes Brillengas |
| 20 | rechtes Brillenglas |
| 22 | Brillenfassung |
| 23 | Abschnitt der Brillenfassung |
| 24 | Kopf |
| 25, 25', 25" | Koordinatensystem |
| 26, 26', 26" | Aufnahmeposition |
| 28 | vorderer Augenabschnitt |
| 30 | linkes Auge |
| 30' | scheinbares linkes Auge |
| 31 | linkes Pupillenzentrum |

| | |
|---|---|
| 32 | Strukturpunkt |
| 33 | Struktur |
| 34, 34', 34" | Blickrichtung linkes Auge |
| 36 | rechtes Auge |
| 36' | scheinbares rechtes Auge |
| 37 | rechtes Pupillenzentrum |
| 38, 38', 38" | Blickrichtung rechtes Auge |
| 39, 39', 39''' | erste Abbildung |
| 40 | Augenrotationspunkt |
| 41, 41', 41" | zweite Abbildung |
| 42 | Pupille linkes Auge |
| 43 | Punkt im Raum |
| 44 | Pupille rechtes Auge |
| 45 | Augenrotationspunkt linkes Auge |
| 45' | Augenrotationspunkt scheinbares linkes Auge |
| 47 | Augenrotationspunkt rechtes Auge |
| 47' | Augenrotationspunkt scheinbares rechtes Auge |
| 48 | Bildebene |
| 50 | Hauptstrahl |
| 52 | Abbildungsstrahlengang |
| 54 | Durchblickpunkt |
| 134 | angenommene Blickrichtung linkes Auge |
| 136 | angenommene Blickrichtung rechtes Auge |
| 138 | Versatz |

**Patentansprüche**

1. Verfahren zum Vermessen der lokalen Brechkraft oder der Brechkraftverteilung eines linken und/oder eines rechten Brillenglases (18, 20) in einer Brillenfassung (22) in Trageposition auf einem Kopf (24) eines Brillenträgers,
**gekennzeichnet durch**
einen Schritt des Erfassens von wenigstens zwei ersten Abbildungen aus relativ zu dem Kopf (24) unterschiedlichen Aufnahmepositionen (26, 26', 26") heraus, wobei die wenigstens zwei ersten Abbildungen (39, 39', 39") jeweils enthalten:

ein Bild eines vorderen Augenabschnitts (28) eines linken Auges (30) mit wenigstens zwei voneinander beabstandeten Strukturpunkten (32) darin, wobei das linke Auge (30) jeweils eine zu der Aufnahmeposition (26, 26', 26") weisende Blickrichtung (34, 34', 34") hat und wobei ein die wenigstens zwei Strukturpunkte (32) abbildender Abbildungsstrahlengang (52) das linke Brillenglas (18) durchsetzt, und/oder ein Bild eines vorderen Augenabschnitts (28) eines rechten Auges (36) mit wenigstens zwei voneinander beabstandeten Strukturpunkten (32) darin, wobei das rechte Auge (36) jeweils eine zu der Aufnahmeposition (26, 26', 26") weisende Blickrichtung (38, 38', 38") hat und wobei ein die wenigstens zwei Strukturpunkte (32) abbildender Abbildungsstrahlengang (52) das rechte Brillenglas (20) durchsetzt,
einen Schritt des Erfassens von wenigstens zwei zweiten Abbildungen (41, 41', 41") aus relativ zu dem Kopf (24) unterschiedlichen Aufnahmepositionen (26, 26', 26") heraus, wobei die wenigstens zwei zweiten Abbildungen (41, 41', 41")jeweils enthalten:

ein Bild der wenigstens zwei voneinander beabstandeten Strukturpunkte (32) des vorderen Augenabschnitts (28) des linken Auges (30) ohne das linke Brillenglas (18) der Brillenfassung (22) oder ohne die Brillenfassung (22), enthaltend das linke Brillenglas (18), oder mit dem linken Brillenglas (18), wobei der dem Bild der wenigstens zwei Strukturpunkte (32) des vorderen Augenabschnitts (28) des linken Auges (30) zugrundeliegende Abbildungsstrahlengang (52) bei dem Erfassen weder das linke noch das rechte Brillenglas (18,20) in der Brillenfassung durchsetzt, und/oder ein Bild der wenigstens zwei Strukturpunkte (32) des vorderen Augenabschnitts (28) des rechten Auges (36) ohne das rechte Brillenglas (20) der Brillenfassung (22) oder ohne die Brillenfassung (22), enthaltend das rechte Brillenglas (20), oder mit dem rechten Brillenglas (20), wobei der dem Bild der wenigstens zwei Strukturpunkte (32) des vorderen Augenabschnitts (28) des rechten Auges (36) zugrundeliegende Abbildungsstrahlengang (52) bei dem Erfassen weder das linke noch das rechte Brillenglas (18, 20) in der Brillenfassung (22) durchsetzt;
einen Schritt des Berechnens von Brillenfassungsinformationsdaten mit Informationen aus der Gruppe Position, Lage, Form und Koordinaten der Brillenfassung (22) aus wenigstens zwei einen identischen Abschnitt der Brillenfassung (22) enthaltenden Abbildungen aus der Gruppe der wenigstens zwei ersten Abbildungen (39, 39', 39") und der wenigstens zwei zweiten Abbildungen (41, 41', 41") in einem Koordinatensystem (25"), das zu einem zu dem Kopf (24) des Brillenträgers ortsfesten Koordinatensystem (25) referenziert ist, mittels Bildauswertung;
einen Schritt des Berechnens der Koordinaten der wenigstens zwei Strukturpunkte (32) des vorderen Augenabschnitts (28) des linken Auges (30) und/oder der wenigstens zwei Strukturpunkte (32) des vorderen Augenabschnitts (28) des rechten Auges

(36) aus den wenigstens zwei zweiten Abbildungen (41, 41', 41") in einem Koordinatensystem (25"), das zu einem zu dem Kopf (24) des Brillenträgers ortsfesten Koordinatensystem (25) referenziert ist, mittels Bildauswertung;

einen Schritt des Bestimmens des Durchblickpunktes (54) durch das linke Brillenglas (18) aus wenigstens einer ersten Abbildung (39, 39', 39") jeweils aus einem aus dem Bild eines vorderen Augenabschnitts (28) des linken Auges (30) mittels Bildauswertung bestimmten Zentrum einer Bildstruktur (33) aus der Gruppe Pupillenbild, Irisbild und den Brillenfassungsinformationsdaten und/oder des Bestimmens des Durchblickpunktes (54) durch das rechte Brillenglas (20) aus wenigstens einer ersten Abbildung (39, 39', 39") jeweils aus einem aus dem Bild eines vorderen Augenabschnitts (28) des rechten Auges (36) mittels Bildauswertung bestimmten Zentrum einer Bildstruktur (33) aus der Gruppe Pupillenbild, Irisbild und den Brillenfassungsinformationsdaten; und

einen Schritt des Bestimmens einer lokalen dioptrische Wirkung des linken Brillengases (18) an dem Durchblickpunkt (54), bei dem aus den aus den wenigstens zwei zweiten Abbildungen (41, 41', 41") berechneten Koordinaten der wenigstens zwei Strukturpunkte (32) des vorderen Augenabschnitts (28) des linken Auges (30) und aus einem Bild dieser wenigstens zwei Strukturpunkte (32) in einer Abbildung aus der Gruppe der wenigstens zwei ersten Abbildungen (39, 39', 39") die lokale Brechkraft k(x,y) des linken Brillenglases (18) an dem Durchblickpunkt (54) bestimmt wird; und/oder einer lokalen dioptrische Wirkung des rechten Brillengases (20) an dem Durchblickpunkt (54), bei dem aus den aus den wenigstens zwei zweiten Abbildungen (41, 41', 41") berechneten Koordinaten der wenigstens zwei Strukturpunkte (32) des vorderen Augenabschnitts (28) des rechten Auges (36) und aus einem Bild dieser wenigstens zwei Strukturpunkte (32, 32') in einer Abbildung aus der Gruppe der wenigstens zwei ersten Abbildungen (39, 39', 39") die lokale Brechkraft k(x,y) des rechten Brillenglases (20) an dem Durchblickpunkt (54) bestimmt wird.

2. Verfahren nach Anspruch 1, **dadurch gekennzeichnet, dass** in dem Schritt des Bestimmens einer lokalen dioptrischen Wirkung des linken Brillenglases (18) an dem Durchblickpunkt (54) die lokale prismatische Wirkung anhand der Koordinaten eines Augenrotationspunkts (40) oder anhand eines Versatzes des vorderen Augenabschnittes (28) in dem Bild des linken Auges (30) ermittelt wird und/oder einer lokalen dioptrischen Wirkung des rechten Brillenglases (20) an dem Durchblickpunkt (54) die lokale prismatische Wirkung anhand der Koordinaten eines Augenrotationspunkts (40) oder eines Versatzes des vorderen Augenabschnittes (28) in dem Bild des rechten Auges (36) ermittelt wird, wobei die Koordinaten des Augenrotationspunkts (45) des linken Auges (30) und/oder des Augenrotationspunkts (47) des rechten Auges (36) aus einem für das linke Auge (30) angenommenen Augendurchmesser $D_L$ und/oder aus einem für das rechte Auge (36) angenommenen Augendurchmesser $D_R$ sowie aus Koordinaten wenigstens eines Strukturpunkts (32) des Kopfes (24) in einem Koordinatensystem (25"), das zu einem zu dem Kopf (24) des Brillenträgers ortsfesten Koordinatensystem (25) referenziert ist, bestimmt werden, wobei diese Koordinaten aus wenigstens zwei Abbildungen aus der Gruppe der wenigstens zwei ersten Abbildungen (39, 39', 39") und der wenigstens zwei zweiten Abbildungen (41, 41', 41") bestimmt sind.

3. Verfahren nach einem der Ansprüche 1 bis 2, **dadurch gekennzeichnet, dass** die wenigstens zwei ersten Abbildungen (39', 39", 39") und die wenigstens zwei zweiten Abbildungen (41, 41', 41") mittels wenigstens einer Bilderfassungseinrichtung (12) erfasst werden, die relativ zu dem Kopf (24) des Brillenträgers verlagert wird, indem die Bilderfassungseinrichtung (12) und/oder der Kopf (24) des Brillenträgers bewegt wird.

4. Verfahren nach Anspruch 3, **dadurch gekennzeichnet, dass** die wenigstens eine Bilderfassungseinrichtung (12) von Hand gehalten wird und/oder dass für das Bestimmen extrinsischer Parameter der wenigstens einen Bilderfassungseinrichtung (12) umfassend deren Position und Lage im Raum bei der Aufnahme der wenigstens zwei ersten Abbildungen (39, 39', 39") und/oder der wenigstens zwei zweiten Abbildungen (41, 41', 41") ein SLAM-Algorithmus verwendet wird.

5. Verfahren nach einem der Ansprüche 3 oder 4, **dadurch gekennzeichnet, dass** für das Berechnen intrinsischer Parameter der Bilderfassungseinrichtung (12) ein SLAM-Algorithmus verwendet wird.

6. Verfahren nach Anspruch 5 **gekennzeichnet durch** intrinsische Parameter aus der Gruppe Brennweite, Bildzentrum, Scherungsparameter, Skalierungsparameter, Verzerrungsparameter.

7. Verfahren nach einem der Ansprüche 1 bis 6, **da-**

**durch gekennzeichnet, dass** für das Berechnen der Koordinaten der wenigstens zwei Strukturpunkte (32) des vorderen Augenabschnitt (28) des linken Auges (30) und/oder für das Berechnen der Koordinaten der wenigstens zwei Strukturpunkte (32) des vorderen Augenabschnitts (28) des rechten Auges (36) und/oder für das Berechnen der Brechkraft aus den Strukturpunkten (32) der ersten Abbildungen (39, 39', 39") Feature-Detektions-Verfahren zur Detektion der Bilder geeigneter Strukturpunkte (32) und Feature-Matching-Verfahren zur Detektion des Bilds korrespondierender Strukturpunkte (32) in den wenigstens zwei ersten Abbildungen (39, 39', 39") und/oder den wenigstens zwei zweiten Abbildungen (41, 41', 41") verwendet werden.

8. Verfahren nach Anspruch 7, **dadurch gekennzeichnet, dass** die lokale Brechkraft des linken Brillenglases (18) aus der Ableitung eines Gradientenfelds, das aus der Ablenkung des Abbildungsstrahlengangs (52) für das Bild des Zentrums einer Bildstruktur (33) aus der Gruppe Pupillenbild, Irisbild des vorderen Augenabschnitts (28) des linken Auges (30) durch das linke Brillenglas (18) der Brillenfassung (22) ermittelt wird, mittels eines Optimierungsverfahrens berechnet wird; und/oder dass die lokale Brechkraft des rechten Brillenglases (20) aus der Ableitung eines Gradientenfelds, das aus der Ablenkung des Abbildungsstrahlengangs (52) für das Bild des Zentrums einer Bildstruktur (33) aus der Gruppe Pupillenbild, Irisbild des vorderen Augenabschnitts (28) des rechten Auges (36) durch das rechte Brillenglas (20) der Brillenfassung (22) ermittelt wird, mittels eines Optimierungsverfahrens berechnet wird.

9. Verfahren nach einem der Ansprüchen 1 bis 8, **dadurch gekennzeichnet, dass** die dioptrische Wirkung des linken und/oder rechten Brillenglases (18, 20) an dem Durchblickpunkt (54) aus einem Formunterschied und/oder einem Größenunterschied von Bildern der die wenigstens zwei-Strukturpunkte (32) aufweisenden Strukturen (33) in den wenigstens zwei ersten Abbildungen (39, 39', 39") und/oder den wenigstens zwei zweiten Abbildungen (41, 41', 41") bestimmt wird.

10. Verfahren nach einem der Ansprüche 1 bis 9, **dadurch gekennzeichnet, dass** zur Bestimmung der lokalen Brechkraft des linken Brillenglases (18) eine Linse modelliert wird, die zwei Flächen und einen Linsenmaterial-Brechungsindex aufweist, wobei Krümmungsradien wenigstens einer der Flächen sowie der Linsenmaterial-Brechungsindex der Linse in einem Optimierungsverfahren berechnet werden und/oder zur Bestimmung der lokalen Brechkraft des rechten Brillenglases (20) eine Linse modelliert wird, die zwei Flächen und einen Linsenmaterial-Brechungsindex aufweist, wobei Krümmungsradien wenigstens einer der Flächen sowie der Brechungsindex der Linse in einem Optimierungsverfahren berechnet werden.

11. Verfahren nach Anspruch 10, **dadurch gekennzeichnet, dass** das Optimierungsverfahren als ein inverser Ansatz formuliert ist.

12. Verfahren nach einem der Ansprüche 1 bis 11, **dadurch gekennzeichnet, dass** für das Berechnen der Koordinaten der wenigstens zwei Strukturpunkte (32) ein SLAM-Algorithmus verwendet wird; und/oder dass der vordere Augenabschnitt (28) des linken und/oder rechten Auges (30, 36) und/oder die Brillenfassung (22) in den wenigstens zwei ersten Abbildungen (39, 39', 39") und/oder den wenigstens zwei zweiten Abbildungen (41, 41', 41") segmentiert wird.

13. Verfahren zum Vermessen der Brechkraftverteilung eines linken und/oder eines rechten Brillenglases (18, 20) in einer Brillenfassung (22), bei dem eine lokale Brechkraft des linken und/oder des rechten Brillenglases (18, 20) an einer Vielzahl von unterschiedlichen Stellen des linken und/oder rechten Brillenglases (18, 20) nach einem der Ansprüche 1 bis 13 vermessen wird.

14. Computerprogrammprodukt mit einem Computerprogramm mit Programmcode zur Durchführung aller Verfahrensschritte, die in einem der Ansprüche 1 bis 13 angegeben sind, wenn das Computerprogramm in eine Rechnereinheit (14) geladen und/oder in einer Rechnereinheit (14) durchgeführt wird.

15. Vorrichtung zum Vermessen der lokalen Brechkraft eines linken und/oder eines rechten Brillenglases (18, 20) in einer Brillenfassung (22) mit einer Bilderfassungseinrichtung (12) und mit einer Rechnereinheit (14), in die ein Computerprogramm mit Programmcode zur Durchführung aller Verfahrensschritte geladen ist, die in einem der Ansprüche 1 bis 13 angegeben sind.

EP 3 730 918 A1

Fig.1

Fig.2

24

28 44 32          31 42 3228

36 37 33 32
30

39

24

32

Fig.3

44 32          42 32

33 32          33 32

39'

24

Fig.4

Fig.5

Fig.6

Fig.7

Fig.8

Fig.9

32  32

33 32  33 32

~41

Fig.10

32  32

33 32  33 32

~41'

Fig.11

32  32

33 32  33 32

~41''

Fig.12

Fig.13

Fig.14

Fig.15

Europäisches
Patentamt

European
Patent Office

Office européen
des brevets

# EUROPÄISCHER RECHERCHENBERICHT

Nummer der Anmeldung

EP 19 17 0714

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 608 109 A1 (THOMSON LICENSING [FR]) 26. Juni 2013 (2013-06-26) * das ganze Dokument * ----- | 1-15 | INV. G01M11/02 ADD. G02C7/06 |
| A | EP 2 392 961 A1 (HOYA CORP [JP]) 7. Dezember 2011 (2011-12-07) * Zusammenfassung; Abbildungen * ----- | 1-15 | |
| A | WO 2016/076530 A1 (YUN CHULJOO [KR]) 19. Mai 2016 (2016-05-19) * Zusammenfassung; Abbildungen * ----- | 1-15 | |
| A,D | WO 2016/207412 A1 (ZEISS CARL AG [DE]; ZEISS CARL VISION INT GMBH [DE]) 29. Dezember 2016 (2016-12-29) * Zusammenfassung; Abbildungen * ----- | 1-15 | |
| A | WO 2017/134275 A1 (EIDGENOSSISCHE TECHNISCHE HOCHSCHULE ZURICH [CH]) 10. August 2017 (2017-08-10) * Zusammenfassung; Abbildungen * ----- | 1-15 | RECHERCHIERTE SACHGEBIETE (IPC) |
| A | WO 2017/205903 A1 (VIDI PTY LTD [AU]) 7. Dezember 2017 (2017-12-07) * Zusammenfassung; Abbildungen * * Absatz [0265] * ----- | 1-15 | G01M G02C |

Der vorliegende Recherchenbericht wurde für alle Patentansprüche erstellt

| Recherchenort | Abschlußdatum der Recherche | Prüfer |
|---|---|---|
| München | 30. Oktober 2019 | Windecker, Robert |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 17 0714

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-10-2019

| Im Recherchenbericht angeführtes Patentdokument | Datum der Veröffentlichung | Mitglied(er) der Patentfamilie | Datum der Veröffentlichung |
|---|---|---|---|
| EP 2608109 A1 | 26-06-2013 | BR 102012031716 A2 | 20-01-2015 |
| | | CN 103163663 A | 19-06-2013 |
| | | EP 2608109 A1 | 26-06-2013 |
| | | FR 2984565 A1 | 21-06-2013 |
| | | JP 6529208 B2 | 12-06-2019 |
| | | JP 2013127621 A | 27-06-2013 |
| | | KR 20130070551 A | 27-06-2013 |
| | | US 2013155393 A1 | 20-06-2013 |
| EP 2392961 A1 | 07-12-2011 | BR PI1007210 A2 | 23-02-2016 |
| | | CN 102301270 A | 28-12-2011 |
| | | EP 2392961 A1 | 07-12-2011 |
| | | JP 5438036 B2 | 12-03-2014 |
| | | JP WO2010087450 A1 | 02-08-2012 |
| | | RU 2011135975 A | 10-03-2013 |
| | | US 2012105801 A1 | 03-05-2012 |
| | | WO 2010087450 A1 | 05-08-2010 |
| WO 2016076530 A1 | 19-05-2016 | KR 101528132 B1 | 12-06-2015 |
| | | WO 2016076530 A1 | 19-05-2016 |
| WO 2016207412 A1 | 29-12-2016 | BR 112017027996 A2 | 28-08-2018 |
| | | CA 2989262 A1 | 29-12-2016 |
| | | CN 107810400 A | 16-03-2018 |
| | | DE 102015211879 A1 | 29-12-2016 |
| | | EP 3314230 A1 | 02-05-2018 |
| | | JP 6368872 B1 | 01-08-2018 |
| | | JP 2018524584 A | 30-08-2018 |
| | | KR 20180019123 A | 23-02-2018 |
| | | US 2018120198 A1 | 03-05-2018 |
| | | WO 2016207412 A1 | 29-12-2016 |
| WO 2017134275 A1 | 10-08-2017 | KEINE | |
| WO 2017205903 A1 | 07-12-2017 | AU 2017274570 A1 | 20-12-2018 |
| | | BR 112018074778 A2 | 06-03-2019 |
| | | CA 3024874 A1 | 07-12-2017 |
| | | CN 109313707 A | 05-02-2019 |
| | | EP 3465545 A1 | 10-04-2019 |
| | | JP 2019518545 A | 04-07-2019 |
| | | US 2019108687 A1 | 11-04-2019 |
| | | WO 2017205903 A1 | 07-12-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016207412 A1

**In der Beschreibung aufgeführte Nicht-Patentliteratur**

- **R. HARTLEY ; A. ZISSERMAN.** Multiple View Geometry. Cambridge University Press, 2004
- **K. GRAUMANN ; B. LAIBE.** Visual Object Recognition. Morgan & Claypool Publishers, 2011
- **A. TEICHMANN et al.** Unsupervised intrinsic calibration of depth sensors via SLAM. *Robotics: Science and Systems 2013,* 24. Juni 2013
- A Theory of Refractive and specular 3D Shape by Light-Path Triangulation. **K.N. KUTUKALOS ; E. STEGER.** International Journals of Computer Vision. 2008, vol. 76, 13-29
- **K.N. KUTUKALOS ; E. STEGER.** A Theory of Refractive and specular 3D Shape by Light-Path Triangulation. University of Toronto